(19) **Europäisches Patentamt / European Patent Office / Office européen des brevets**

(11) **EP 3 360 426 A1**

(12) # EUROPEAN PATENT APPLICATION
published in accordance with Art. 153(4) EPC

(43) Date of publication:
**15.08.2018 Bulletin 2018/33**

(21) Application number: **16853779.3**

(22) Date of filing: **07.10.2016**

(51) Int Cl.:
*A23L 5/00* (2016.01)        *A23L 9/10* (2016.01)
*A23L 15/00* (2016.01)        *A23L 23/00* (2016.01)
*A23L 29/20* (2016.01)

(86) International application number:
**PCT/JP2016/080038**

(87) International publication number:
**WO 2017/061628 (13.04.2017 Gazette 2017/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.10.2015  JP 2015200601**
**28.10.2015  JP 2015212034**
**06.11.2015  JP 2015218483**
**13.05.2016  JP 2016097467**

(71) Applicant: **San-Ei Gen F.F.I., INC.**
**Toyonaka-shi, Osaka 561-8588 (JP)**

(72) Inventors:
• **NAKAJIMA, Kohei**
**Toyonaka-shi**
**Osaka 561-8588 (JP)**
• **TOYOIZUMI, Satoshi**
**Toyonaka-shi**
**Osaka 561-8588 (JP)**

• **OKUDA, Eiji**
**Toyonaka-shi**
**Osaka 561-8588 (JP)**
• **SAGA, Masaharu**
**Toyonaka-shi**
**Osaka 561-8588 (JP)**
• **YAMASAKI, Hiroki**
**Toyonaka-shi**
**Osaka 561-8588 (JP)**
• **IWAI, Kazumi**
**Toyonaka-shi**
**Osaka 561-8588 (JP)**
• **KAWASHIMA, Dai**
**Toyonaka-shi**
**Osaka 561-8588 (JP)**
• **HARA, Daizo**
**Toyonaka-shi**
**Osaka 561-8588 (JP)**

(74) Representative: **Hoffmann Eitle**
**Patent- und Rechtsanwälte PartmbB**
**Arabellastraße 30**
**81925 München (DE)**

(54) **FOOD-IMPROVING AGENT**

(57)    An object of the present invention is to provide a protein-containing food having a smooth, grittiness-free texture without aggregation or roughness of the protein, even after severe sterilization such as retort sterilization.
    The object of the present invention is achieved by a protein aggregation inhibitor comprising welan gum.

**Description**

Technical Field

The present invention relates to a food-improving agent. More specifically, the present invention relates to the following technical fields (1) to (4).

(1) The present invention relates to a protein aggregation inhibitor, and a protein-containing food in which aggregation of protein is inhibited by adding the protein aggregation inhibitor. More specifically, the present invention relates to a protein-containing food in which a soft and smooth texture is ensured by inhibiting excessive protein aggregation during the heating upon manufacture of a food containing a protein-containing material such as egg, cow milk, or soymilk, and therefore the appearance and the mouthfeel are not impaired by roughness of the structure; the food may also be used as a food for dysphagia. The present invention also relates to a production method of the food.

(2) The present invention relates to a production method of a processed meat (processed meat or fish such as sausage, meatball, deep-fried chicken, deep-fried pork, *kamaboko* (steamed fish paste), or *tsumire* (minced fish ball)) in which the original texture of the processed meat is retained or enhanced while ensuring a soft texture. The present invention also relates to a production method thereof.

(3) The present invention relates to a flour-containing food with improved texture (for example, desirable perceived meltability in the mouth is imparted to the food) such as *takoyaki* (octopus ball), *okonomiyaki* (savory flour-and-cabbage pizza), *akashiyaki* (octopus egg ball), *taiyaki* (Japanese fish-shaped cake filled with sweet bean jam), *imagawayaki* (Japanese muffin filled with sweet bean jam), *monjayaki* (savory flour-and-cabbage pizza with runnier dough), pizza, bread, cake, or doughnuts.

(4) The present invention relates to a gelatin-containing soup in which syneresis upon the freeze-thawing is inhibited, and that will be hard to gel even if it cools after heating with a microwave oven.

Background Art

Technical field (1) described above has the following problems.

Protein-containing foods have suffered from a problem of roughness inside or on the surface of the food due to the aggregation or precipitation of the protein upon heating for sterilization or the like during manufacture. The roughness is generated as the protein derived from milk, egg, or the like used as a raw material is denatured by heat, thereby causing protein aggregation or precipitates. The roughness thus means deterioration of the uniformity of the components, or a state with such deterioration. Generally, foods with such roughness apparently have gritty texture due to aggregated, cloudy, or turbid components, and the feel on the tongue and mouth are inferior. As a result, the commercial value of the food significantly decreases by the roughness.

Because of such a problem, protein-containing foods (e.g., gelled foods such as pudding) are generally distributed under chilled conditions. Further, there has been some research on gelled foods in which the gel does not become rough even after retort sterilization under a high temperature; a method for increasing the viscosity of a mix; gelled foods that can endure retort sterilization containing a gelling agent in addition to the protein; and the like. However, these techniques have suffered from a problem such that some or all of the resulting gelled foods have a starchy texture, and do not have a soft and smooth texture such as that of a pudding or a mousse.

In addition, with the recent increase in the population of elderly people, the number of persons with so-called dysphagia, is increasing; therefore, there has been the development of foods for dysphagia that enables patients to orally take food and enjoy the food, and that also improves their eating ability. Since many persons with dysphagia often have difficulty in eating a large amount of food, there is an urgent need for the development of foods having a high nutritional value that enables patients to take in a great deal of nutrients, even in a small amount of food. Further, in particular, considering a situation in which a patient with dysphagia receives home care, it is difficult to have a large stock of chilled foods, because the freshness date of such foods is usually short. Therefore, there has been a demand for shelf-stable foods or the like that can be stored for a long period of time at ordinary temperature, and that can be stored bedside or the like, thereby enabling the patient to immediately intake the food whenever necessary.

Protein is an important component among the nutrients in foods for persons with dysphagia. Thus, there has been a demand for foods that enable the patients to take a large amount of protein, even in a small amount of food. However, there has been a problem concerning tendency for aggregation or precipitation of proteins under severe conditions in, for example, retort sterilization, which is performed at 120°C or more. Further, retort sterilization of a protein-containing food that is performed to enable ordinary temperature distribution of the food generally imparts a firm texture to the food. In this view as well, foods containing a protein such as a dairy ingredient (e.g., shelf-stable pudding) are not suitable for foods for persons with dysphagia; further, it has been even more difficult to produce a shelf-stable gelled food with a high protein content that enables the patients to, even in a small amount of food, take a necessary amount of protein.

Known protein-containing foods include various food products using egg as a raw material, such as rolled omelet, omelet, or scrambled egg. The proteins contained in such protein-containing foods containing eggs are gelled due to denaturation by heating or the like when they are directly cooked at home or a shop, thereby the processed egg products, such as omelet or scrambled egg, can be prepared. On the other hand, when they are overly heated for sterilization, there is a problem of coagulation due to excessive denaturation of the egg, which results in loss of the original fluffy texture of a processed egg product.

Further, hollandaise sauce, carbonara sauce, and the like have been known as protein-containing foods made by using, as a main raw material, liquid egg or the like containing a protein. Further, there are many varieties of soups containing soymilk or cow milk as a raw material. Hollandaise sauce and carbonara sauce are eaten by being mixed with a food, and therefore are provided in a smooth, grittiness-free state.

Hollandaise sauce, known as a basic sauce of French cuisine, contains butter and lemon juice, and is emulsified with egg yolk. The sauce, which is used for vegetables or eggs Benedict, is eaten by being mixed with a food, imparting smooth and grittiness-free texture. Thus, the aggregation generated by excessive heating worsens its textrue, and deteriorate the commercial value. Similarly, since carbonara sauce is also eaten by being mixed with pasta, the decrease in the texture due to the aggregation is not preferable, as it deteriorates the smooth texture of pasta and sauce.

However, it has been difficult to prevent excessive protein aggregation during manufacturing process of a food by adjusting the heating condition, which involves technological problems and inefficiencies in production.

Previously, starches has been used as a material for improving the properties of protein-containing foods, such as the processed egg products or the sauces described above. For example, the addition of starches to a rolled omelet will impart freeze-thaw resistance, tear resistance, shape retainability, and the like. However, the addition of starches has also been problematic, as it results in a heavy and pasty texture, and thereby a rolled omelet with a fluffy texture cannot be obtained.

To solve this problem of protein-containing foods, various methods have been considered.

First, as a method for producing a gelled food as one of the protein-containing foods containing a whey protein, the gelled food applying the heat coagulation property of the whey protein to gelation has been known. For example, a method for producing a gelled food by adding a whey protein concentrate to cow milk or a dairy product, followed by heating, has been known (PTL 1-1). Such a gel food produced by using the heat coagulation property of whey protein tends to have a hard texture, which is different from the smooth and good perceived meltability in the mouth of a chilled milk pudding. Further, a method for producing a gelled food characterized by gelation of a complex of whey protein and gelatin in an acidic range has been known (PTL 1-2). However, this method has many limitations in the production method, and also requires a reaction of gelatin and whey protein under a specific condition; this results in a problem of great variation in physical properties of the gels to be obtained depending on their production conditions. In particular, the resulting gel becomes tough when the content of protein is more than 5 wt%; the smooth texture decreases as the content of the protein in the gelled food increases.

Further, another known gelled food (PTL 1-3) is a gelled food containing an egg component and/or whey protein obtained by gelation of hydrocolloids, characterized by incorporating organic acid esters of monoglycerides and polyglycerol esters of fatty acids having an HLB of 10 or more. However, if the protein content of the gelled food is high (e.g., about 5 wt%), a gritty texture is imparted after retort sterilization, thereby a gelled food with a smooth texture cannot be obtained. Further, for this gelled food, the type of emulsifier and usage thereof are specified; it is also specified that the first component containing organic acid esters of monoglycerides and the second component containing polyglycerol esters of fatty acids having an HLB of 10 or more are prepared first, and the first and second components are then mixed to prepare the gelled food. The production is thus complicated and inefficient.

Next, as a method for preventing coagulation and gelation of a food such as an omelet, an egg yolk composition characterized by comprising a cellulose having a mean particle diameter of 15 $\mu$m or less (PTL 1-4), a method for producing a raw material of a yolk-containing food characterized by heating a slurry containing an egg yolk, polysaccharide thickeners, dextrins and water for gelation, followed by grinding the resulting gel (PTL 1-5), a liquid egg composition comprising liquid egg and cellulose (PTL 1-6), and the like have been disclosed. However, none of these methods present a sufficient solution.

Further, as a method for imparting a smooth, grittiness-free texture to a protein-containing food such as hollandaise sauce, a liquid egg composition comprising crystalline fibrous cellulose, a water-soluble polymer and the like (PTL 1-7), an egg food material or a processed egg product obtained by adding an acid-soluble soy protein to an egg material (PTL 1-8), a processed egg product containing an inhomogeneous membranous egg coagulum, characterized in that the egg processed product contains a specific amount of yellow membranous egg coagulum having an area of 700-5000 mm$^2$ and a thickness of 7 mm or less (PTL 1-9), PTL 1-10), a protein reaggregation inhibitor containing polyglutamic acid (PTL 1-11), a processed egg food containing fermentation-derived cellulose (PTL 1-12), and the like are disclosed regarding improvement in texture of processed egg products.

However, these techniques were insufficient in terms of imparting a creamy texture to a protein-containing food, and preventing the loss of the smoothness due to aggregation as a result of heating of the protein.

Technical field (2) described above has the following problems.

Heretofore, a soft texture has been required for various foods. In recent years, a soft texture has also been demanded for processed meat foods such as ham, sausage, meatball, or the like.

As a method for imparting softness to a processed meat food, various methods for incorporating air bubbles in a processed meat food have been suggested. For example, PTL 2-1 discloses a method of manufacturing a foamed processed meat food with a light texture, comprising grinding a meat with salt, foaming the meat by mixing, and then molding and heating the meat. This document also discloses adding, as a foaming agent, yam, egg white, polysaccharide thickeners (e.g., guar gum), and an emulsifier, upon mixing.

Further, for example, PTL 2-2 discloses producing a processed meat food with a soft texture by adding a hydrolyzed soy protein to meat, kneading the meat, whipping the meat for foaming, molding the whipped meat mixture, and heating the formed product.

Furthermore, for example, PTL 2-3 discloses producing a processed meat food with a soft texture by mixing an enzymatically hydrolyzed vegetable protein with foamability (wheat protein, soy protein), a mucilage comprising a polysaccharide, and a finely chopped meat, kneading and forming the mixture, and heating the product.

Furthermore, for example, PTLs 2-4 and 2-5 disclose a technique of imparting a juicy feeling and a soft, meat-like texture by adding a whey protein to a processed meat food.

However, the techniques of these documents have difficulty in stably retaining air bubbles in the meat when a vegetable protein, such as yam, soy protein (including hydrolyzate), or egg white is used as a foaming agent. More specifically, the use of these components as a foaming agent results in insufficient foaming of a meat-containing composition, and failure to seal a sufficient amount of air bubbles in the composition. Moreover, long-term stability of the formed air bubbles is also insufficient; and the desired soft texture may not be obtained because of, for example, the disappearance of air bubbles during processing such as molding or heating. The techniques thus have difficulty in practical use.

Further, a technique using egg white or wheat may have a usual problem of possibility of allergic reaction of a consumer.

Technical field (3) described above has the following problems.

Various flour-containing foods containing flour as a main raw material (e.g., *takoyaki, okonomiyaki, akashiyaki, taiyaki, imagawayaki, monjayaki,* cake, bread, pizza, doughnuts, and the like) have problems, for example, such that as the content of wheat flour increases, the dough becomes dry after heating upon preparation; further, the texture becomes heavy, and the perceived meltability in the mouth decreases.

Examples of suggested methods for improving the texture of such a flour-containing food include:

*okonomiyaki, takoyaki,* pancake, or sponge cake comprising a hydrolyzed starch having two requirements such that the dextrose equivalent of the hydrolyzed starch is 5 to 28, and the turbidity of 30 mass% suspension of the hydrolyzed starch after being stored at 4°C for 3 days is less than 1.0 (PTL 3-1);
a *takoyaki* mix containing a maltodextrin having DE of 10 to 20 (PTL 3-2);
a method for producing steamed bread comprising adding a maltodextrin having DE of 20 or less (PTL 3-3);
a method for producing moist soufflé cake preferably containing 1 to 10 parts by mass of dextrin of 10 parts by mass or more of glucose polymer (PTL 3-4); and
a quality improver for a flour-containing food characterized by comprising a dextrin having specific characteristics (PTL 3-5).

When dextrins disclosed in PTLs 3-1 to 3-4 were used, texture-improving effects were hardly observed and further improvement was still necessary, as described below.

More specifically, the previously known technique using a dextrin failed to impart a creamy feeling to *takoyaki* or *okonomiyaki,* which are one of a flour-containing food. Therefore, it was necessary to add oils, fats, and the like to impart creamy feeling to these foods. However, the addition of oils, fats, or the like generates a distinctive, heavy and oily texture that lingers on the tongue, as well as stickiness; therefore, it has been difficult to prepare creamy and light *takoyaki* or *okonomiyaki* with desirable good perceived meltability in the mouth. Further, although these techniques were able to impart, to some extent, a moist texture to pizza, bread, cake, doughnuts, and the like as flour-containing foods, they completely failed to impart a light and creamy perceived meltability in the mouth.

Since the technique disclosed in PTL 3-2 uses pregelatinized starch, the significantly noticeable distinctive pasty texture of starch has been problematic.

Although the techniques disclosed in PTLs 3-3 and 3-4 using maltodextrin make it possible to impart moist texture to steamed bread, the moisture also makes the perceived meltability in the mouth heavier, thereby completely failing to impart moist and good perceived meltability in the mouth.

The technique disclosed in PTL 3-5 has a problem in terms of convenience.

Further, flour-containing foods have a problem of deterioration in texture due to long-term storage, or freeze-thawing.

For example, *takoyaki* and *okonomiyaki,* which can be cooked at home using flour, are also distributed as frozen prepared food, and are often thawed with a microwave oven at home to be eaten.

As described above, when wheat flour is used solely as a cereal flour as a major raw material of *takoyaki* or *okonomiyaki* that is distributed and sold as a frozen prepared food, the resulting food becomes hard and dry after the freeze-thawing, and has a heavy texture. To solve this problem, the use of modified starch with flour has been attempted. Similarly, the use of modified starch has also been attempted in the production of cake, bread, pizza, and doughnuts so as to prevent deterioration in texture due to long-term storage, and to alleviate the hard and dry texture of flour itself.

However, although modified starch is superior in freeze-thaw resistance compared with general starch, a flour-containing food containing modified starch has been problematic in terms of further pasty and heavy texture, and decrease in perceived meltability in mouth compared with a food containing general starch.

Therefore, there has been a demand for a flour-containing food in which the good texture and the perceived meltability in the mouth comparable to those immediately after the preparation are retained, and that is free from the distinctive pastiness and stickiness of starch upon eating, even after long-term storage or freeze-thawing.

Technical field (4) described above has the following problems.

In recent years, chilled products such as:

(1) processed and cooked fluid foods, such as soup containing noodles (e.g., Chinese noodles (e.g., ramen), *udon, soba*) and/or ingredients (e.g., meatballs, vegetables, etc.), pot dish, stew, curry, or pasta sauce; and
(2) foods having a fluid portion (there are also cases where the entire food is fluid), including a liquid condiment such as dressing, sauce, and the like, whose fluid portions are solidified by using a polysaccharide such as gelatin before being distributed;

have been commercially available, mostly in convenience stores.

Solidifying (gelatinizing) the fluid portions of these foods using a polysaccharide such as gelatin simplifies the manufacture because of the easy quantification of the fluid portion, and prevents the water migration into the ingredients, thereby keeping fresh firmness. There are also various other advantages including prevention of liquid leakage upon the distribution.

Currently, the fluid portions solidified by gelatin or the like used for these foods are separately manufactured according to the timing of the manufacture of the chilled product, and are stored in a chilled state. However, to quickly catch up with the variable market demands and control the production step to enable delivery at appropriate times, it is more efficient to manufacture certain numbers of fluid portions of chilled products at the same time in advance, and store them in a freezer.

However, severe syneresis occurs upon thawing of frozen fluid portions of chilled products prepared by adding gelatin. Therefore, when a necessary amount of a soup containing gelatin that is prepared and frozen in advance is thawed and packed in a container in a solid state (gel state), syneresis immediately occurs, and the syneresis liquid may transfer to the ingredients. It has been problematic that, although the ingredients such as vegetables were packed in a fresh state as an advantage of a chilled product, the syneresis from the solid soup completely soaks the ingredients, resulting in the loss of their firmness. Further, when noodles or *gyoza* (dumpling with minced pork and vegetable stuffing) skins are contained as the ingredients, the appearance also deteriorates in addition to the texture by absorbing moisture. Further, in terms of increase in the risk of liquid leakage caused by syneresis during the transportation, influence on the storage stability of the product due to increase of bacteria by an increase of syneresis, and the like, the inhibition of syneresis in a solid soup upon freeze-thawing has been an urgent issue.

Therefore, various methods have been considered to prevent syneresis from a solid soup upon freeze-thawing.

More specifically, a frozen sauce or frozen soup comprising a complex of the plant sterols and yolk lipoprotein and one or more members selected from starch, dextrin, hydrogenated starch hydrolysate, gelatin, and polysaccharide thickeners (PTL 4-1); a method comprising including 0.0001 to 0.01 parts by weight of sucralose per 100 parts by weight of a white sauce-containing food, and including 0.01 to 5 parts by weight of gelatin and/or polysaccharide thickeners per 100 parts by weight of a white sauce-containing food (PTL 4-2); a liquid condiment wherein freeze-thaw resistance is imparted to a gel structure obtained by gelatin by incorporating, as a thickener, modified starch, polysaccharide thickeners, and gelatin, and adjusting the sugar content (PTL 4-3); a syneresis inhibitor for frozen food products obtained by mixing fish gelatin powder with a food material before coagulation (PTL 4-4); a raw *gyoza* free from syneresis, containing fillings obtained by adding gelatin powder to the mixture of finely cut vegetables, meats, seasonings and the like, and then being wrapped with a skin (PTL 4-5); and like techniques have been disclosed.

Citation List

Patent Literature

PTL 1-1: Japanese Patent No. 2836867A
PTL 1-2: JPH06-276953
PTL 1-3: JP2002-262787
PTL 1-4: JPH07-107943
PTL 1-5: JP2008-199900
PTL 1-6: JP2009-65836
PTL 1-7: JP2009-65836
PTL 1-8: International Publication WO2006/038413 pamphlet
PTL 1-9: JP2011-10557A
PTL 1-10: JP2011-10556A
PTL 1-11: JP2008-11712A
PTL 1-12: JP2013-247869A
PTL 2-1: International Publication (WO97/14320)
PTL 2-2: JPH02-286059A
PTL 2-3: JPH04-190766A
PTL 2-4: JP2001-224335A
PTL 2-5: JP2004-141146A
PTL 3-1: JP2005-58016A
PTL 3-2: JP2001-69903A
PTL 3-3: JPH08-205831A
PTL 3-4: JP2007-215448A
PTL 3-5: JP2010-154801A
PTL 4-1: JP2007-259834A
PTL 4-2: JP2007-202564A
PTL 4-3: JP2002-219A
PTL 4-4: JPH11-164655A
PTL 4-5: JPH10-75748A

Summary of Invention

Technical Problem

An object of the present invention is as follows in light of the circumstances described regarding technical field (1) above.

The present invention was developed to solve the problems described above, and an object of the present invention is to inhibit protein aggregation or the like which occurs during the heating of a food containing a protein-containing material such as milk or egg, thereby providing a protein-containing food that can retain a smooth texture without generating roughness.

Another object of the present invention is as follows, in light of the circumstances described regarding technical field (2) above.

As a result of examination of various materials so as to prepare processed meat foods having a soft texture in light of the circumstances of prior art described above, the present inventors found that a processed meat food with a soft texture does not necessarily satisfy the deliciousness demanded by the consumer.

Further, the present inventors found that this problem is attributable to the fact that the meaty texture (more specifically, the texture of a processed meat food derived from the meat contained therein, or a texture that makes the consumer feel the incorporation of meat in the food) is reduced in such a processed meat food with a soft texture.

However, as a result of further consideration, the present inventors found that softening the texture of a processed meat food and retention of the meaty texture are not always incompatible, and can be ensured at the same time.

The present invention was developed in light of such circumstances, and an object of the invention is to provide a processed meat food (e.g., processed meat or fish food) such as sausage, meatball, or the like in which the original texture of the processed meat food containing meat or seafood is retained or enhanced, while ensuring a soft texture that satisfies the recent demand for soft texture.

Another object of the present invention is as follows, in light of the circumstances described regarding technical field (3) above.

In light of the above problems, the present invention provides, for example, a method for improving the texture of a flour-containing food, such as *takoyaki, okonomiyaki, akashiyaki, taiyaki, imagawayaki, monjayaki,* pizza, bread, cake, doughnuts and the like.

More specifically, for *takoyaki, okonomiyaki,* and the like, the present invention provides a method for imparting a creamy and light texture, as well as a desired perceived meltability in the mouth with no pastiness.

For pizza, bread, cake, doughnuts, and the like, the present invention provides, for example, a method for imparting a soft texture and a smooth perceived meltability in the mouth.

Another object of the present invention is as follows, in light of the circumstances described regarding technical field (4) above.

To inhibit syneresis in ramen soup and pasta sauce containing a large amount of moisture, many components will be necessary, as in PTL 4-1. When a sweetener is used, it is necessary to consider the influence on the taste, as in PTL 4-2. In the technique of PTL 4-3, minute adjustment in the amounts of the components was necessary.

Further, to inhibit syneresis of a food that contains not as much moisture as that of the soups (for example, PTL 4-4 and 4-5), it is possible to adopt a syneresis inhibiting means using gelatin powder, thereby allowing gelatin to absorb the moisture; however, such a technique is still insufficient to solve the syneresis in the soups containing a large amount of moisture. Therefore, no effective solutions have been discovered regarding the inhibition of syneresis from a solid soup containing gelatin upon thawing.

The present invention was made to solve such problems. More specifically, an object of the present invention is to provide a method for inhibiting syneresis from a gelatin-containing solid soup upon freeze-thawing.

Solution to Problem

As a result of extensive research, the present inventors found that the above problems can be solved by using welan gum, and completed the present invention based on this finding.

The outlines of the respective problems in technical fields (1) to (4) are described below.

Regarding technical field (1), as a result of extensive research on protein-containing foods, the present inventors found that the above problems can be solved by adding welan gum as a raw material of a protein-containing food. With this finding, the inventors completed the present invention.

One embodiment of the present invention has been developed based on these findings, and includes the following aspects.

Item 1-1

A protein aggregation inhibitor comprising welan gum.

Item 1-2

A protein-containing food comprising welan gum (preferably a protein-containing food comprising welan gum, in which protein aggregation is inhibited).

Item 1-3

The protein-containing food according to Item 1-2, wherein the protein-containing food is any one of a processed egg product, a processed milk product, and a processed soybean product.

Item 1-4

A method for inhibiting thermal aggregation of a protein in a protein-containing food, the method comprising adding welan gum.

Item 1-5

The method according to Item 1-4, wherein the protein-containing food is any one of a processed egg product, a processed milk product, and a processed soybean product.

Item 1-6

A method for producing a protein-containing food, comprising adding the protein aggregation inhibitor of Item 1-1.

Item 1-7

A method for producing the protein-containing food according to Item 1-6, wherein the protein-containing food is any one of a processed egg product, a processed milk product, and a processed soybean product.

Regarding technical field (2), as a result of extensive research to solve the above problems, the present inventors found that it is possible to retain or enhance the texture of meat while ensuring a soft texture by adding welan gum to a raw material composition containing meat or seafood.

One embodiment of the present invention has been developed based on these findings, and includes the following aspects.

Item 2-1

A processed meat food comprising welan gum (preferably, a processed meat food comprising welan gum having improved texture (meat-like texture), compared with a processed meat food that does not contain welan gum)).

Item 2-2

The processed meat food according to Item 2-1, wherein the amount of welan gum in the processed meat food is 0.001 to 3 mass%, based on the total mass of the processed meat food after the addition of the welan gum.

Item 2-3

A method for improving the texture of a processed meat food, comprising adding welan gum.

Item 2-4

The method for improving the texture of a processed meat food according to Item 2-3, wherein the amount of welan gum in the processed meat food is 0.001 to 3 mass%, based on the total mass of the processed meat food.

Item 2-5

A method for producing a processed meat food, comprising adding welan gum.

Item 2-6

The method for producing a processed meat food according to Item 2-5, wherein the amount of welan gum in the processed meat food is 0.001 to 3 mass%, based on the total mass of the processed meat food.

Item 2-7

The method for producing a processed meat food according to Item 2-5 or 2-6, wherein the processed meat food is cooked through a step of mixing a meat block and a welan gum-containing aqueous liquid.

Item 2-8

The method for producing a processed meat food according to any one of Items 2-5 to 2-7, wherein the method comprises the step of bringing a meat block into contact with a pickling liquid containing welan gum.

Item 2-9

A texture improver for a processed meat food, comprising welan gum.

Regarding technical field (3), the present inventors carried out extensive research in light of the above problems of the prior art, and found that welan gum is superior in improving the texture of a flour-containing food, compared with a previously known food hydrocolloids. The inventors confirmed, for example, that using welan gum makes it possible to impart to a target food a texture that was not achieved by a previously known technique using polysaccharide thickeners or proteins. With this finding, the inventors completed the present invention.

One embodiment of the present invention has been developed based on these findings, and includes the following aspects.

Item 3-1

A flour-containing food comprising welan gum (preferably, a flour-containing food comprising welan gum having improved texture, compared with a flour-containing food that does not contain welan gum).

Item 3-2

The flour-containing food according to Item 3-1, wherein the amount of the welan gum in the flour-containing food is 0.001 to 1 parts by mass.

Item 3-3

A method for improving the texture of a flour-containing food, comprising adding welan gum.

Item 3-4

The method for improving the texture of a flour-containing food according to Item 3-3, wherein the amount of the welan gum in the flour-containing food is 0.001 to 1 parts by mass.

Item 3-5

A method for producing a flour-containing food, comprising adding welan gum.

Item 3-6

The method for producing a flour-containing food according to Item 3-5, wherein the amount of the welan gum in the flour-containing food is 0.001 to 1 parts by mass.

Item 3-7

A texture improver for a flour-containing food, comprising welan gum.

Regarding technical field (4), the present inventors carried out research in light of the above problems, and found that syneresis upon thawing can be prevented by adding welan gum to a solid soup containing gelatin that is to be used through freeze-thawing. With this finding, the inventors completed the present invention.

The present invention relates to a gelatin-containing soup according to the embodiments below.

Item 4-1

A method for inhibiting syneresis in a gelatin-containing soup upon freeze-thawing, comprising adding welan gum to a gelatin-containing soup.

Item 4-2

The method according to Item 4-1, wherein the amount of the welan gum is 0.01 to 1 mass%, based on the total mass of the gelatin-containing soup after the addition of the welan gum.

Item 4-3

The method according to Item 4-2 or 4-3, wherein the method comprises adding a polysaccharide thickener in combination with welan gum.

Item 4-4

A gelatin-containing soup for freeze-thawing, comprising welan gum.

Item 4-5

The gelatin-containing soup according to Item 4-4, wherein the content of welan gum is 0.01 to 1 mass%.

Item 4-6

The gelatin-containing soup according to Item 4-4 or 4-5, further comprising a polysaccharide thickener.

Advantageous Effects of Invention

According to embodiment (1) of the present invention, it becomes possible to provide a protein-containing food in which a smooth, roughness-free texture is retained by inhibiting protein aggregation and the like which occurs during the heating of a food containing a protein-containing material, such as milk, egg, or soybean.

According to embodiment (2) of the present invention, it is possible to provide a processed meat food with a soft texture through ordinary procedures (a usual method). The method is a simple method merely using welan gum as a raw material of a processed meat food, and therefore has an advantage such that the method does not require a special step or special manufacturing conditions.

According to embodiment (3) of the present invention, it is possible to provide a flour-containing food with good perceived meltability in the mouth, such as *taiyaki, okonomiyaki, akashiyaki, taiyaki, imagawayaki, monjayaki,* pizza, bread, cake, doughnuts, and the like.

More specifically, the present invention is capable of imparting creamy, light, and good perceived meltability in the mouth to a flour-containing food, such as *takoyaki, okonomiyaki, akashiyaki, taiyaki, imagawayaki, monjayaki,* and the like.

Further, the present invention is capable of imparting a soft and moist texture, as well as a good perceived meltability in the mouth, to a flour-containing food, such as pizza, bread, cake, doughnuts, and the like.

According to embodiment (4) of the present invention, it becomes possible to prevent syneresis upon the thawing of a solid soup containing gelatin for eating after the soup is produced and stored in a freezer, thereby preparing and providing a chilled product without causing syneresis. Further, with such prevention of syneresis in the chilled product, the ingredients and the moisture do not come in contact with each other, thereby preventing the ingredients from swelling by moisture absorption or deteriorating in texture, thereby distributing the product to the stores while retaining a preferable texture. Further, since the product can be prepared without changing the gelation temperature of the soup, it is advantageous in that the soup is not solidified even when the temperature of the soup decreases after heating in a microwave oven or the like.

Description of Embodiments

(1)

A protein aggregation inhibitor of the present invention, a protein-containing food of the present invention in which protein aggregation is inhibited, and a method for inhibiting protein aggregation of the present invention are described below.

A person skilled in the art will be able to understand these embodiments of the present invention by combining the respective explanations of the protein aggregation inhibitor of the present invention, the protein-containing food of the present invention in which protein aggregation is inhibited, and the method for inhibiting protein aggregation of the present invention, together with common technical knowledge.

The protein aggregation inhibitor of the present invention comprises welan gum.

For example, by adding the protein aggregation inhibitor comprising welan gum to a protein-containing food, it is possible to provide the protein-containing food in which protein aggregation is inhibited.

Examples of protein-containing foods include foods containing, as a raw material, an animal or plant-derived protein, such as egg, milk, soybean, and rice (specifically, processed egg product, a processed milk product, or a processed soybean product).

Examples of processed egg products include processed egg foods containing, as a main raw material, liquid egg containing egg yolk, (e.g., rolled omlet, *chawanmushi* (liquid egg dish steamed in a cup), omelet, scrambled egg, and egg sauce to be applied on *oyakodon* (a bowl of rice with cooked chicken and egg on top)).

The liquid egg may be produced from one or more raw materials selected from the group consisting of whole egg, egg yolk, and egg white.

Examples of protein-containing foods further include gelled foods (preferably a semisolid food, more preferably a gelled food for which further finer, slick, and smooth feel on the tongue or texture is required) produced by solidifying a protein (as well as other components as necessary) derived from one or more members selected from the group consisting of raw milk material, egg, soybean, and the like.

Examples include pudding, pudding shake, drinkable jelly pudding, drinkable jelly, mousse, Bavarian cream, milk pudding, tofu, pastry cream (flour-containing cream), Chinese almond jelly, and foods for patients with dysphagia.

Particularly preferable examples thereof include products produced as a gelled food with a high protein content.

The protein-containing food may be, for example, the gelled food, or a food containing the gelled food. In the following, the "gelled food" may mean a protein-containing food, depending on the context.

The gelled food in the protein-containing food as described above generally contains a gelling agent to form a gel.

The gelling agent is generally used for foods. It is sufficient that the gelling agent has a gelling function solely or in combination of two or more kinds thereof, and converts a liquid food to a solid food. The gelling agent preferably has a function of improving the texture or the property of the generated gel.

Specific examples thereof include one or more members selected from the group consisting of deacylated gellan gum, native gellan gum, agar, carrageenan, xanthan gum, furcellaran, alginic acid, alginates, pectins, gelatin, locust bean gum, guar gum, gum arabic, karaya gum, pullulan, tara gum, glucomannan, tamarind seed gum, psyllium seed gum, macrophomopsis gum, rhamsan gum, starch, and the like.

Among these, preferred examples include one or more members selected from agar, deacylated gellan gum, native gellan gum, carrageenan, xanthan gum, locust bean gum, pectins, psyllium seed gum, tamarind seed gum, glucomannan, tara gum, and guar gum.

The gelling agents containing these components can be commercially obtained. Examples include GEL UP PI, GEL UP PI-963, GEL UP PI-983(F), and the like, produced by San-Ei Gen F.F.I., Inc.

Further, the gelled food may also contain starches such as cornstarch and tapioca starch, as well as polysaccharides such as carboxymethylcellulose, as a component of the gelled food.

Addition of such gelling agents and/or polysaccharides to increase the viscosity to the extent giving no influence on the gel property adjunctively serves to stabilize the protein.

Further, salts such as calcium lactate, potassium chloride, and the like may be added to the gelled food to enable it to adjunctively reinforce the gelling formation of the gelling agent.

The amount of the gelling agent in the gel food may be selected according to the type of gelling agent to be used, the type of the product, and the like. For example, the amount may be, in the case of pudding as an example of the gelle food, 0.05 to 4 wt%, preferably 0.1 to 2 wt%, more preferably 0.15 to 1.5 wt%, based on the total amount of the pudding.

The gelled food according to the present invention is not restricted by the sterilization conditions in which the gelled food is exposed or the temperature during distribution; in particular, the gelled food of the present invention also include foods in a form for ordinary temperature distribution that requires sterilization at a high temperature. To prepare a food for ordinary temperature distribution, retort sterilization, which perform heating at 100 to 150°C for about 10 to 60 minutes, UHT sterilization, HTST sterilization, and like may be adopted. Retort sterilization is preferable.

According to the present invention, problems such as loss of the uniformity of the gel, aggregation or precipitation of the protein, and the like may be highly inhibited even in severe sterilization such as retort sterilization, and a gelled food in which the components are homogeneously retained can be provided.

The containers for packing the gel food are not limited. For example, the gelled food may be packed or sealed in a can, bottle, paper pack, PET bottle, laminated pack, cheer pack pouch, or the like. The gelled food may be distributed and sold in a sealing state in such a container. This enables consumers to easily obtain or intake the gelled food.

Usually, gelled foods, which have a higher protein content among protein-containing foods, undergo aggregation or precipitation by heating due to thermal denaturation, in particular, severe heating such as retort sterilization.

In contrast, in the protein-containing foods (e.g., gelled foods) of the present invention, thermally denatured particulate whey protein may be added as a protein component.

In this case of the protein-containing food of the present invention, it is particularly advantageous that the aggregation, precipitation, and the like due to thermal denaturation are highly inhibited in the production step even when the food has a high protein content (specifically, for example, 3 to 20 mass%). Accordingly, the food has a smooth and soft texture.

The protein-containing food of the present invention has a property very suitable for foods for patients with dysphagia.

Generally, foods suitable for patients with dysphagia require textural properties such as:

1) excellence in formation of food lump (a property of the food clumping together)

2) less adherence to the oral cavity and pharynx; and
3) high water-holding property.

The protein-containing food of the present invention may be a food satisfying such textural properties.

More specifically, the protein-containing food of the present invention may be provided as a gelled food, such as pudding or jelly for nutritional support, gelled foods with adjusted protein content, mousse-like foods, hydration jelly, pureed foods, strained vegetables, chopped foods, or high-nutrient liquid foods.

Further, the protein aggregation inhibitor of the present invention also exerts the effects not only in the above gelled foods but also protein-containing foods with good taste and flavor attributable to milk or egg as well as a creamy and smooth texture (preferably, protein-containing foods having fluidity), as preferable effects.

More specifically, the present invention provides a protein-containing food (preferably a protein-containing food having fluidity), such as sauces (e.g., hollandaise sauce, carbonara sauce, etc.), liquid soup, and the like, having good perceived meltability in mouth and rich flavor which are characteristic of egg, for example, by imparting the distinct creamy texture and preventing the loss of smoothness due to protein aggregation caused by heating of protein.

The protein aggregation inhibitor of the present invention comprises welan gum.

Welan gum mainly comprises a polysaccharide obtained from a culture medium of bacteria of the genus *Sphingomonas* (*Sphingomonas* sp.). Simply, commonly distributed commercial products can be used. Specific examples include VIS TOP W (produced by San-Ei Gen F.F.I., Inc.) and the like.

The protein-containing foods of the present invention are produced by a method comprising adding welan gum. The production of the protein-containing foods of the present invention may be performed by a production method generally used for foods, except for the addition of welan gum.

The time of the addition of welan gum is generally not particularly limited; however, when the production step of the protein-containing food comprises a heating step, welan gum is preferably added before the heating step.

For example, by adopting a method of adding a welan gum dispersion upon mixing of raw materials of the protein-containing food, a method of adding welan gum together with a gelling agent, or a similar method, it becomes possible to provide a protein-containing food with smooth and roughness-free texture in which protein aggregation or the like that occurs in the subsequent heating treatment is inhibited.

More specifically, for example, when welan gum is added to a liquid egg,

(1) a method of adding and mixing welan gum dispersion in water prepared in advance with a liquid egg as a raw material, a method of directly adding and mixing welan gum to a liquid egg;
(2) a method of adding welan gum to the whole egg followed by stirring, thereby obtaining a liquid egg; and the like may be performed.

As is clear from above, the method for producing a protein-containing food of the present invention must be a method in which welan gum is added to a raw material before the heating treatment (e.g., heat preparation).

The addition amount of welan gum in the protein-containing food of the present invention may be adjusted as necessary depending on the type of the protein-containing food to be prepared, or the raw materials to be contained in the food.

For processed egg products (e.g., rolled egg, omelet, scrambled egg, and sauces (e.g., egg sauce used as a raw material of the foods, liquid hollandaise sauce, and carbonara sauce)), it is preferable that the processed egg food contains 0.01 to 0.5 mass%, preferably 0.1 to 0.3 mass% of welan gum.

When the addition amount is less than 0.01 mass%, the effects of the present invention may not be fully obtained.

On the other hand, when the addition amount is more than 0.5 mass%, the viscosity increases and its property becomes closer to a gel. As a result, the fluffy texture attributable to egg or the like is lost, and the texture may become heavy.

Further, for gelled foods, it is desirable to add welan gum so that the gelled food contains 0.01 to 1 mass%, preferably 0.05 to 0.5 mass%, more preferably 0.1 to 0.3 mass% of welan gum.

When the addition amount is less than 0.01 mass%, the effects of the present invention may not be sufficiently obtained, and protein aggregation cannot be prevented.

On the other hand, when the addition amount is more than 1.0 mass%, although a protein aggregation inhibitory effect can be ensured, the texture of the gelled food becomes heavy.

The protein-containing foods of the present invention may contain, as a protein source, animal and plant-derived protein, such as dairy ingredients (e.g., cow milk, fresh cream, whole-milk powder, skim-milk powder, sweetened condensed whole milk, defatted condensed milk, yogurt (fermented milk), fermented milk powder, butter, soymilk, etc.), whole egg, egg yolk, egg white, and soybean protein.

Insofar as the effects of the present invention are not significantly impaired, various food ingredients and food additives (e.g., sugars, sweeteners, organic acids or their salts, flavors, color additives, antioxidants, shelf-life extenders, preservatives, and the like) for use in usual food manufacture may be added to the protein-containing food of the present invention.

Other examples of various food ingredients that can be added to the processed egg food (e.g., omelet) as the protein-containing food of the present invention include:

chopped vegetables such as carrot, tomato, and green pea; processed meat and seafood such as bacon and *kamaboko;* edible oils and fats such as margarine and butter; and seasonings such as salt, pepper, ketchup, mayonnaise, and sauce.

Further, apart from the purpose of combined use with welan gum or the use as an additive of the preparation thereof, xanthan gum, guar gum, agar, locust bean gum, carrageenan, gellan gum, tamarind seed gum, gum arabic, pectin, gelatin, tara gum, celluloses, and soybean soluble polysaccharides may also be added for other purposes (for example, for the purpose of thickening or stabilizing processed egg food).

Examples of sugars and sweeteners include: sweetener components such as sugar, fructose, glucose, starch syrup, hydrogenated starch hydrolysates, honey, isomerized glucose syrup, invert sugar, oligosaccharides (isomaltooligosaccharide, reduced xylooligosaccharide, reduced gentiooligosaccharide, xylooligosaccharide, gentiooligosaccharide, nigerooligosaccharide, teandeoligosaccharide, soybean oligosaccharide, etc.), trehalose, sugar alcohols (maltitol, erythritol, sorbitol, palatinit, xylitol, lactitol, etc.), sugar-binding starch syrup (coupling sugar), aspartame, acesulfame potassium, sucralose, alitame, neotame, licorice extract (glycyrrhizin), saccharin, saccharin sodium, advantame, stevia extract, and stevia powder.

Preferable examples of organic acids and their salts include: organic acids and their sodium salts such as citric acid, trisodium citrate, tartaric acid, sodium tartrate, malic acid, sodium malate, lactic acid, sodium lactate, gluconic acid, and sodium gluconate.

The protein-containing food of the present invention may also contain, as necessary, extracts of black tea, coffee, or the like; powdery components such as cocoa or green powdered tea; and fruit juices of strawberry, orange, and the like. The protein-containing food of the present invention may also intendedly contain calcium lactate, calcium gluconate, and like calcium to enrich the calcium amount.

Further, emulsifiers, antioxidants, preservatives, vitamins, and minerals other than calcium (e.g., iron, magnesium, phosphorus, potassium, etc.) may be added to the protein-containing food of the present invention.

The production of the protein-containing food of the present invention may be performed merely by adding welan gum as an ingredient, and it is not particularly necessary to change the production conditions; thus, the production may be performed according to the conventional production method for respective food types.

Therefore, new production devices are unnecessary, and existing factory facilities may advantageously be used.

(2)

A processed meat food of the present invention, a method for improving the texture of the processed meat food of the present invention, and a method for producing the processed meat food of the present invention are explained below.

A person skilled in the art will be able to understand these embodiments of the present invention by combining the respective explanations of the processed meat food of the present invention, the method for improving the texture of the processed meat food of the present invention, and the method for producing the processed meat food of the present invention, together with common technical knowledge.

In the present invention, "meat" includes animal meat and seafood (i.e., edible seafood).

The processed meat food of the present invention may be any product, as long as it partially or entirely contains, as a raw material for processing, meats such as beef, pork, poultry meat (chicken, duck meat, and the like), sheep meat, horse meat, rabbit meat, and the like; and seafood such as cod, croaker, pike conger, sardine, sea bream, *hoki,* cutlass fish, perch, Atka mackerel, and the like; the type of meat is not particularly limited.

The "meat" herein may mean a meat containing additives (e.g., salt), a pulverized meat block, or a pulverized meat (minced or mashed meat).

The "meat" may contain fats.

In the broad sense, the "meat" includes viscera (e.g., heart, stomach, intestine).

The "meat" also includes meats processed without removing parts (e.g., tendon, bones) other than the meat of an animal used as the material.

The "seafood" may contain fats.

The "seafood" also includes seafood processed without removing parts (e.g., head, viscera, bones, and skin) other than the meat of a fish.

Examples of processed meat foods include:

(1) foods processed and prepared by using, as a raw material, minced meat, or cut or finely chopped meat (finely chopped meat or pulverized meat) (e.g., processed meat foods such as sausage and ham), prepared from one or more kinds of the meats described above;

(2) foods produced by using meat either partially or entirely (e.g., deep-fried chicken, breaded pork cutlet, meatballs (e.g., meatballs, *tsukune,* etc.), meatloaf, Hamburg steak, patty, shish kebab, chicken nugget, stuffed cabbage, meat *gyoza,* meat *shao-mai,* meat-containing cake, and the like;

(3) foods produced by using restructured steak produced by processing pieces of chopped meat with a binder or the like (e.g., deep-fried chicken, breaded pork cutlet, and chicken nugget); and

(4) processed foods produced by using, as a raw material, seafood (e.g., processed foods produced by using, either partially or entirely, seafood, such as seafood ham, seafood sausage, *kamaboko, tsumire, chikuwa* (tube-shaped fish sausage), *hanpen* (boiled surimi), *satsuma-age* (deep-fried surimi), seafood-containing cake, and the like).

The "meat-containing cake" and the "seafood-containing cake" herein mean a sponge cake containing meat, or a sponge cake containing seafood.

The present invention provides a processed meat food in which the texture of the meat is retained or enhanced while ensuring a soft texture; and a production method of the processed meat food.

The processed meat food of the present invention can be obtained by adding welan gum to a processed meat food.

The processed meat food of the present invention can be obtained by adding welan gum to a processed meat food. More specifically, the processed meat food may be produced by a production method, such as a method of:

(1) a method comprising mixing welan gum with either part or the entirety of one or more materials constituting the processed meat food such as a meat;

(2) a method comprising mixing a welan gum-containing aqueous solution with one or more materials constituting the processed meat food such as a meat;

and the like.

The proportion of the welan gum to be added to the various materials of processed meat food such as a meat in the method (1) is, generally, for example, such that the welan gum is contained at least in an amount of 0.001 mass% in the processed meat food.

If the amount of the welan gum is greatly smaller than 0.001 mass%, the effects of improving meat-like texture decrease, and the consumer will not feel a sufficient meat-like texture. The amount is preferably 0.005 mass% or more.

Further, the upper limit of the amount of welan gum is preferably adjusted to be 3 mass% or less, preferably 1.5 mass% or less, in the processed meat food.

If the content of welan gum is more than 3 mass%, the viscosity during the mixing may excessively increase, thereby inducing undesirable effects including difficulty in mixing with a meat or seafood, and an excessive heavy texture of the resulting processed meat food.

In production method (2), the method of mixing the welan gum-containing aqueous solution with one or more materials of the processed meat food may be a method of simply mixing it with the materials including a meat.

The mixing may mean contact of a meat with a welan gum-containing aqueous solution.

Alternatively, the method may be performed by preparing a welan gum-containing pickling liquid (an example of the welan gum-containing aqueous solution), and causing the welan gum-containing pickling liquid to infiltrate into the meat block through a method using, for example, injection, tumbling, immersion, or the like.

As a raw material constituting the processed meat food, polysaccharide thickeners other than welan gum may be used insofar as the effects of the present invention are not significantly impaired.

In addition, optional components, such as starch (modified starch), an emulsifier, a seasoning, a flavor, a color additive, a sweetener, an acidulant, an acidity regulator, a polyphosphate, baking powder, skim milk powder, sodium caseinate, a shelf-life extender, a preservative, an antioxidant, an enzyme, a gelatin, a processed egg product, a processed milk product, a processed soybean product, a processed wheat product, a processed rice product, a processed oil and fat product, dietary fiber, and the like, may also be added to the processed meat product.

The use of the above-mentioned polysaccharide thickeners improves the meat-like texture achieved by welan gum, and is thus useful in preparing a processed meat food in which the meat texture is retained or enhanced while introducing a further soft texture.

Examples of the polysaccharide thickeners include guar gum, gellan gum, carrageenan, xanthan gum, locust bean gum, glucomannan, agar, alginic acid, sodium alginate, tamarind seed gum, tara gum, gum arabic, tragacanth gum, karaya gum, pectin, pullulan, carboxy methylcellulose (CMC) or its sodium salt, microcrystalline cellulose, fermentation-derived cellulose, and furcellaran. These polysaccharide thickeners may be used singly, or in a combination of two or more.

When welan gum and a polysaccharide thickener are used in combination, the processed meat food of the present invention may be prepared through:

(a) a method comprising the step of mixing (i) the welan gum and (ii) a polysaccharide thickener with either part or the entirety of one or more materials constituting the processed meat food such as a meat;

(b) a method comprising the step of preparing an aqueous solution containing (i) the welan gum and (ii) a polysaccharide thickener, and mixing the aqueous solution with other one or more materials constituting the processed meat food, such as a meat;

(c) a method comprising the step of preparing an aqueous solution containing (i) the welan gum, (ii) a polysaccharide thickener, and one or more various materials constituting the processed meat food, such as a meat, and causing the aqueous solution as a pickling liquid to infiltrate into the meat block through a method using, for example, injection, tumbling, soaking, or the like; and other similar methods.

In this case, the proportion of the polysaccharide thickener may vary depending on the type of polysaccharide thickener to be used, or the desired texture of the final processed meat food, and therefore cannot be generally specified; however, for example, the proportion of the polysaccharide thickener is generally 0.001 to 3.0 mass%, preferably 0.005 to 2.5 mass%, more preferably 0.01 to 2.0 mass%, per 100 mass% of the final processed meat food.

In the present invention, the operation of mixing welan gum, meat, and various materials is not particularly limited insofar as the method is capable of evenly dispersing welan gum in the resulting processed meat food. For example, any methods of stirring and mixing the target materials using various conventional stirrers (whisk, beater, mixer, cutting machine, and the like) may be used.

The processed meat food of the present invention may be prepared by carrying out processing in addition to the above steps through a conventional processing method for the manufacture of processed meat foods according to the type and usage of the foods. Examples of the processing methods include one or more methods selected from refrigeration, freezing, boiling, steaming, baking, oil-cooking (deep-frying), drying and smoking, and microwave-heating; the processing is performed with respect to the meat product after the treated meat product is shaped into a desired form.

Further, in the present invention, welan gum may be formulated beforehand into an agent together with food additives and the like that are used for the manufacture of processed meat foods. Formulation of welan gum into a texture-improving agent has advantages in terms of handling ease during manufacturing process.

Examples of components that can be used in combination with welan gum to constitute a texture-improving agent include, without limitation, food additives and food materials that are used for processed meat foods, as described above.

Specifically, examples of thickening stabilizers include xanthan gum, galactomannan, gellan gum, carrageenan, cellulose, soybean polysaccharides, starches (modified starches), and gelatins; examples of emulsifiers include lecithin, sucrose fatty acid ester, and glycerol fatty acid ester; and examples of binders include dextrin, cyclodextrin, glucose, sucrose, lactose, and trehalose.

In addition, it is also possible to optionally use a seasoning, an acidulant, an acidity regulator, various polyphosphates, sodium caseinate, a processed egg product, a processed milk product, a processed soybean product, a processed wheat product, a processed rice product, a processed oil and fat product, dietary fiber, shelf-life extender, and a preservative, solely or in combination in an amount necessary for the manufacture of the processed meat food.

Further, the amount of the texture-improving agent to be added to the processed meat food containing welan gum may be adjusted so that the content of the welan gum in the resulting processed meat food falls within the above range. The same can be said for the method for improving the texture of a processed meat food of the present invention, and a method for producing a processed meat food of the present invention.

(3)

A flour-containing food of the present invention, a method for producing the food, a method for improving the texture of the flour-containing food of the present invention, and a texture-improving agent for a flour-containing food are explained below.

A person skilled in the art will be able to understand these embodiments of the present invention by combining the respective explanations of the flour-containing food of the present invention, the method for producing the food, the method for improving the texture of a flour-containing food of the present invention, and a texture-improving agent for a flour-containing food, together with common technical knowledge.

Flour-containing food

The present invention relates to a flour-containing food comprising welan gum, as mentioned above.

The flour-containing food is not particularly limited insofar as the food contains flour.

Examples include *takoyaki, okonomiyaki, akashiyaki, taiyaki, imagawayaki, monjayaki,* various breads such as steamed bread, sweet buns, and plain loafs; cakes such as sponge cake and pancake; pizza; and doughnuts.

The amount of welan gum of the present invention in these flour-containing foods may be appropriately adjusted according to the target food and the required texture.

Specifically, welan gum is incorporated in the food so that 0.001 to 1 parts by mass, preferably 0.005 to 0.5 parts by mass, of welan gum is incorporated based on the total amount of the flour-containing food.

Further, in addition to these general foods, examples also include other flour-containing foods such as:

(1) special diets such as protein-, phosphorus-, and potassium-controlled food, salt-controlled food, oil-and-fat controlled food, probiotic food, calcium-, iron-, and vitamin-enriched food, low-allergy food, high-nutrition liquid diet, pureed food, and minced food;
(2) therapeutic diets; and
(3) dysphagia diets.

The method for adding welan gum to a flour-containing food of the present invention is not particularly limited, and previously known methods, such as a method of blending welan gum with other powder materials in advance, methods using kneading, spraying or soaking, and the like may be performed. Since special conditions or equipment is unnecessary in the addition of welan gum, it is also advantageous for industries.

Further, insofar as the effects of the present invention are not significantly impaired, various food materials and additives for use in the manufacture of a flour-containing food other than welan gum may also be added to the flour-containing food of the present invention. Specifically, sugar, a polysaccharide, a sweetener, a seasoning, an acidulant, an organic acid or a salt thereof, a flavor, a color additive, an antioxidant, a shelf-life extender, a preservative, baking powder, a yeast food, an enzyme, a processed egg product, a processed soybean product, a processed rice product, a processed wheat product, whey protein, a processed oil and fat product, starches (modified starches), yeasts, salt, edible oils and fats, processed milk product, seafood, meat, and vegetables may also be added. Further, as necessary, it is possible to use extracts of tea, black tea, coffee, and the like; powdery components such as cocoa and powdered green tea; and fruit flesh or fruit juices of strawberry, orange, and the like.

Further, in the present invention, welan gum may be formulated beforehand into an agent together with food additives and the like that are used for the manufacture of flour-containing food. Formulation of welan gum into a texture-improving agent has advantages in terms of handling ease during manufacturing process.

Examples of components that can be used in combination with welan gum to constitute a texture-improving agent include, without limitation, food additives and food materials that are used for flour-containing food, as described above.

Specifically, examples of thickening stabilizers include xanthan gum, galactomannan, gellan gum, carrageenan, cellulose, soybean polysaccharides, starches (modified starches), and gelatins; examples of emulsifiers include lecithin, sucrose fatty acid ester, and glycerol fatty acid ester; and examples of binders include dextrin, cyclodextrin, glucose, sucrose, lactose, and trehalose. Examples of other food materials include processed egg products, processed soybean products, processed milk products, whey proteins, processed rice products, processed wheat products, processed oil and fat products, and the like.

The composition of the texture-improving agent of the present invention may vary depending on the type etc. of the flour-containing food to which the texture-improving agent is applied.

Further, the amount of the texture-improving agent of the present invention to be added to the flour-containing food may be adjusted so that the content of the welan gum in the resulting flour-containing food falls within the above range.

Texture-improving method

Subsequently, a method for improving the texture of the flour-containing food of the present invention is explained below.
The texture-improving method for the flour-containing food of the present invention may be a method using welan gum or the texture-improving agent containing welan gum as a raw material for the manufacture of a flour-containing food.

Regarding the addition of a texture-improving agent, the method of adding a texture-improving agent to a flour-containing food described above may be referred to.

With the texture-improving method of the present invention, it is possible to impart a soft and moist texture to a flour-containing food, while imparting good perceived meltability in the mouth.

Further, the present invention also provides a method for producing a flour-containing food with improved texture.

The production method may be a method comprising adding the texture-improving agent of the present invention described above to a flour-containing food. The details of the method may be understood by referring to the description of the flour-containing food stated above.

With the present invention, it becomes possible to produce a flour-containing food having a soft and moist texture, as well as good perceived meltability in the mouth.

(4)

The syneresis suppression method of the present invention (more specifically, the method for suppressing syneresis upon freeze-thawing of a gelatin-containing soup), and a gelatin-containing soup for freeze-thawing of the present invention are explained below.

A person skilled in the art will be able to understand these embodiments by combining the respective explanations of the syneresis suppression method of the present invention, and the gelatin-containing soup for freeze-thawing of the present invention, together with common technical knowledge.

The gelatin-containing soup of the present invention (hereinafter simply referred to as a gelatin-containing soup) may include a fluid portion of a soup stock or a soup-like food (including a food of which the entirety is fluid) that is mass-produced and stored in a freezer; and then is to be thawed by heating, such as boiling or the like, or thawed naturally without particular heating during the production step.

Examples of the foods to which such a gelatin-containing soup is applied include:
soups containing, as ingredients, vegetables, meatballs, and boiled *gyoza;* noodle dishes such as ramen, *udon,* and *soba;* stew; prepared fluid foods to be applied on rice (e.g., curry, sauce of *gyudon* (beef-on-rice-bowl)); and pasta sauce.

Further, the present invention may be used for soups of stuffed cabbage, *oden* (Japanese dish of various ingredients stewed in soy-flavored soup), rice porridge, *zosui* (seasoned rice porridge containing other ingredients), and the like, that may be distributed with the soup being in contact with the ingredients.

These foods are distributed and stored at a temperature within the chilled-food temperature range. Upon eating, the gelatin-containing soup is dissolved by heating with a microwave oven or the like, and the food may be eaten as a general food.

The gelatin-containing soup of the present invention contains gelatin, and may be used through freeze-thawing.

The gelatin-containing soup of the present invention is not particularly limited by the production method, flavoring, category (e.g., Japanese style, Western style, and Chinese style), and the like.

The ingredient of the gelatin-containing soup of the present invention is not particularly limited.

The gelatin-containing soup of the present invention contains welan gum, in addition to gelatin.

The gelatin-containing soup of the present invention may be for freeze-thawing.

The gelatin-containing soup of the present invention may be suitably frozen and thawed.

The method and the conditions for the manufacture of the gelatin-containing soup of the present invention may be the same as those of a previously known gelatin-containing soup, except for the use or addition of welan gum.

The timing of the use or addition is not particularly limited; however, welan gum is preferably added before freeze-thawing.

The method for suppressing the syneresis upon the freeze-thawing of the gelatin-containing soup of the present invention comprises adding welan gum to the gelatin-containing soup.

The addition step may be the step of adding welan gum during the manufacture of a gelatin-containing soup.

Similar to a general gelatin-containing soup, the materials of the gelatin-containing soup of the present invention include, in addition to gelatin and welan gum, extracts of chicken, beef, pork, fish (e.g., bonito fish), kombu, shiitake mushroom, and the like (e.g., dashi stock, consomme, bouillon); soy sauce; salt; vinegar; citric acid; *umami* seasoning; antioxidants; flavors; color additives; sweeteners; preservatives; and the like.

Further, insofar as the effects of the present invention are not significantly impaired, the gelatin-containing soup of the present invention may contain polysaccharides such as xanthan gum, carrageenan, guar gum, pectin, locust bean gum, tamarind seed gum, curdlan, gellan gum, or fermentation-derived cellulose, in combination with welan gum.

Examples of the ingredients to be combined with the gelatin-containing soup of the present invention include any materials generally used for the food examples listed above, specifically, dairy products such as cow's milk, butter, cheese and the like; vegetables such as corn, green pea, onion, tomato, green pepper, parsley, carrot, and potatoes; processed meat products or seafood paste products, such as ham, bacon, meatball, and sardine paste ball; noodles such as ramen, pasta, *udon* and *soba;* and ingredients of boiled gyoza, stuffed cabbage, and *oden.*

The gelatin-containing soup of the present invention further encompasses, in addition to soup, soup-like foods (e.g., stew, potage, curry, sauce of *gyudon* (beef-on-rice bowl), and pasta sauce).

The gelatin contained in the gelatin-containing soup of the present invention may be a gelatin generally used for food manufacture, and is not limited by the material such as beef, pork, and fish, or the production method.

The content of gelatin in the gelatin-containing soup of the present invention may vary depending on the amounts of welan gum and other components described later, or the type of soup; however, the content of gelatin is generally in a range of 0.5 to 3 mass%, and preferably in a range of 1 to 2 mass%. If the amount of gelatin is excessively small, the soup may not be sufficiently gelled. On the other hand, an excessively large amount of gelatin may cause undesirable effects regarding the taste or texture of the soup or the food containing the soup, such as an increase in odor originating from the raw material of gelatin, a degradation in texture upon eating due to an increase in viscosity to more than the appropriate viscosity, and the like.

The content of welan gum in the gelatin-containing soup of the present invention may vary depending on the gelatin amount described above; however, generally, the content of welan gum is in a range of 0.01 to 1 mass%, and preferably in a range of 0.05 to 0.5 mass%. If the amount is excessively small, the syneresis suppression effects upon freeze-thawing may become insufficient. On the other hand, an excessively large amount of welan gum may decrease the flavor release of the gelatin-containing soup, and may degrade the texture due to excessive viscosity.

However, for example, for a soup requiring a high thickness, such as *ankake* (a thick, starchy sauce), the content of welan gum may preferably exceed the above range without problem.

In the present invention, the mass ratio of gelatin and welan gum may be, for example, in a range of 20:1 to 2:1, and in a range of 20:1 to 10:1.

Examples

The present invention is specifically described below with reference to Examples, Test Examples, etc. However, the present invention is not limited to these Examples.

In the formulas, the unit of value is "part by mass," unless otherwise specified.

The term "part" refers to "part by mass," unless otherwise specified.

The expression "%" refers to "mass %," unless otherwise specified.

In this specification, * represents a product of San-Ei Gen F.F.I., Inc.

In this specification, the superscript "TM" represents a registered trademark of San-Ei Gen F.F.I., Inc.

The evaluation expression "AA" represents "particularly excellent," "A" represents "excellent," "B" represents "good," and "C" represents "defect."

The "blank" in each table represents a blank test for the Example or Comparative Example in the table (or in a group in the table).

Test Example 1-1: Omelet

An egg slurry was prepared based on the following formula, followed by cooking, thereby preparing an omelet. Table 1-1 shows the types and amounts of the additives used in this example.

| - Formula | (parts) |
| --- | --- |
| Whole egg: | 70.0 |
| Salad oil: | 15.0 |
| Salt: | 0.5 |
| Preservative (NATURAL KEEPER™*) : | 0.2 |
| Seasoning (SAN-LIKE™ AMINO BASE NAG*): | 0.1 |
| Additives: | see Table 1-1 |

The total amount was adjusted to 100 parts with ion exchanged water.

- Preparation Method

Step 1) The additives were added to water, and the mixture was stirred for 10 minutes.

Step 2) Raw materials other than salad oil were added and stirred for 5 minutes.

Step 3) Salad oil was added, followed by cooking for 1 minute and 40 seconds at 150°C.

Step 4) After being slightly cooled, the omelet was stored in a refrigerator.

Step 5) The texture was evaluated on the following day.

Table 1-1

| No. | Additive | Amount | Texture |
|---|---|---|---|
| Blank | - | - | Dry and hard texture without fluffiness |
| Comparative Example 1-1 | Modified starch (Gel Pro OS-28: Oji Cornstarch Co., Ltd.) | 1.5% | Fluffier than blank but pasty |
| Comparative Example 1-2 | Microcrystalline cellulose blend (Ceolus RC-N30: Asahi Kasei Corporation) | 0.1% | Dry and hard texture like blank |
| Comparative Example 1-3 | | 0.5% | Slightly fluffier than Comparative Example 1-2, but inferior to Comparative Example 1-1 |
| Example 1-1 | | 0.01% | Fluffier than Comparative Example 1-1, and no pastiness |
| Example 1-2 | Welan gum (VIS TOP™ W*) | 0.1% | Fluffiest and softest among all test samples. The center had a runny texture. |
| Example 1-3 | | 0.5% | Fluffier than Comparative Example 1-1 and Example 1-1, but still inferior to Example 1-2. The center had a runny texture, as in Example 1-2. |
| Example 1-4 | Welan gum (VIS TOP™ W*) | 0.01% | Less pasty than Comparative Example 1-1, and fairly fluffy |
| | Modified starch (Gel Pro OS-28: Oji Cornstarch Co., Ltd.) | 1.5% | |
| Example 1-5 | Welan gum (VIS TOP™ W*) | 0.01% | Fluffier than Comparative Example 1-3 |
| | Microcrystalline cellulose blend (Ceolus CL-611S: Asahi Kasei Corporation) | 0.1% | |

- Evaluation

The omelet to which welan gum was added had a texture fluffier than that to which a modified starch or a microcrystalline cellulose blend was added. Further, the omelet had a fluffy texture without starch-like pastiness. Further, in the omelet containing 0.1 mass % or more welan gum, the center portion was in a runny state.

Further, even when 0.5 % of welan gum was added, the viscosity of the egg slurry did not greatly increase, and the slurry easily spread over a cooking iron plate. Therefore, the handling was not impaired due to an increase in viscosity, and a problem of scorch during cooking also did not occur.

Further, in the omelet containing a combination of welan gum and a modified starch or a microcrystalline cellulose blend, the fluffiness synergistically increased, compared with the product to which welan gum was solely added; moreover, the effects of alleviating the starch pastiness were observed.

Test Example 1-2: Hollandaise sauce

Hollandaise sauce was prepared according to the formula below. Table 1-2 shows the types and amounts of the additives used in this example, and the evaluation results of the obtained hollandaise sauce.

| - Formula | (parts) |
|---|---|
| Butter: | 35.0 |
| Egg yolk: | 14.0 |
| White wine: | 7.0 |
| Salt: | 0.8 |
| Frozen lemon juice: | 1.0 |
| Powdered black pepper: | 0.01 |
| Seasoning (SAN-LIKE™ KISOAJI*): | 0.8 |
| Seasoning: | 0.2 |

(continued)

| - Formula (SAN-LIKE™ EGG ENHANCER VN-43*) | (parts) |
|---|---|
| Preservative (NATURAL KEEPER™ *): | 0.2 |
| Sweetener (SAN SWEET™ SU-100*): | 0.01 |
| Additives: | see Table 1-2 |

The total amount was adjusted to 100 parts with ion exchanged water.

- Preparation Method

Step 1) The additives were added to water, and the mixture was stirred for 10 minutes at 6,000 rpm using a homomixer.
Step 2) White wine was boiled, and soon after boiling the mixture obtained in Step 1 and materials other than butter were added, followed by stirring for 5 minutes.
Step 3) While adding butter that has been molten in a hot-water bath, the mixture was stirred for 10 minutes at 3,000 rpm using a homomixer.
Step 4) The resulting mixture was packed in a PE pouch container, and sterilized in a hot-water bath at 85°C for 30 minutes.

Table 1-2

| No. | Additive | Amount | Evaluation |
|---|---|---|---|
| Blank | Blank | - | Lumpy aggregates were observed in entire sauce |
| Comparative Example 1-4 | Microcrystalline cellulose blend (Ceolus RC-N30: Asahi Kasei Corporation) | 1.0% | Lumpy aggregates were observed as in blank |
| Comparative Example 1-5 | Microcrystalline cellulose blend (Ceolus RC-N30: Asahi Kasei Corporation) | 1.5% | Lumpy aggregates were observed as in blank |
| Example 1-6 | Welan gum (VIS TOP™ W*) | 0.02% | Slight aggregates were observed, but fluidity was good. |
| Example 1-7 | | 0.05% | No aggregates were observed, and entire sauce was smooth and desirably fluid |
| Example 1-8 | | 0.1% | No aggregates were observed, and entire sauce was smooth and desirably fluid |
| Example 1-9 | Welan gum (VIS TOP™ W*) | 0.02% | No aggregates were observed, and entire sauce was smooth and desirably fluid |
| | Microcrystalline cellulose blend (Ceolus RC-N30: Asahi Kasei Corporation) | 0.3% | |

- Results

The hollandaise sauce to which welan gum was added was a smooth sauce in which no aggregates were generated. It was also confirmed that the protein aggregation inhibitory effects were synergistically increased by combining welan gum with a microcrystalline cellulose blend.

Test Example 1-3: Carbonara sauce

Carbonara sauce was prepared according to the formula below. Table 1-3 shows the types and amounts of the additives used in this example, and the evaluation of the obtained carbonara sauce.

| - Formula | (parts) |
|---|---|
| Egg yolk: | 3.0 |
| Skim milk powder: | 5.6 |
| Salt: | 1.6 |
| Salad oil: | 5.2 |
| Additives: | see Table 1-3 |

The total amount was adjusted to 100 parts with ion exchanged water.

- Preparation Method

Step 1) The additives were added to water, and the mixture was stirred at 80°C for 10 minutes.

Step 2) The mixture was adjusted in temperature to 40°C; after the rest of the materials was added, the mixture was further stirred for 5 minutes.

Step 3) The resulting mixture was packed in a PE pouch container, and subjected to retort sterilization at 121°C for 20 minutes.

Table 1-3

| No. | Additive | Amount | Evaluation |
|---|---|---|---|
| Blank | Blank | - | Severe aggregation |
| Comparative Example 1-6 | Modified starch (Suehiro 200: Oji Cornstarch Co., Ltd.) | 4.0% | Aggregation |
| Comparative Example 1-7 | Xanthan gum (San Ace™*) | 0.4% | Slight aggregation |
| Comparative Example 1-8 | Xanthan gum (San Ace™*) | 0.5% | No aggregation, slimy |
| Comparative Example 1-9 | Microcrystalline cellulose preparation (Ceolus DX-2: Asahi Kasei Corporation) | 0.4% | Severe aggregation |
| Comparative Example 1-10 | Microcrystalline cellulose preparation (Ceolus DX-2: Asahi Kasei Corporation) | 0.5% | Severe aggregation |
| Example 1-6 | Welan gum (VIS TOP™ W*) | 0.4% | No aggregation, texture was creamy and smooth |
| Example 1-7 | Welan gum (VIS TOP™ W*) | 0.5% | No aggregation, texture was creamy and smooth |

- Results

In the carbonara sauce containing welan gum of the present invention, no aggregation occurred, and a smooth thickness was imparted. Further, the sliminess particular to polysaccharides was not sensed. In a Comparative Example using a modified starch, aggregation was observed. In a Comparative Example using 0.4 % of xanthan gum, aggregation was slightly observed. In the carbonara sauce to which 0.5 % of xanthan gum was added, although no aggregation was observed, the strong sliminess was sensed. The texture of the sauce was thus not suitable for pasta. Severe aggregation was observed in the sauce to which a microcrystalline cellulose blend was added; thus, no aggregation inhibitory effects were observed.

Test Example 1-4: Shelf-stable pudding

Shelf-stable pudding was prepared according to the formula below. Table 1-4 shows the types and amounts of the additives used in this example. Table 1-4 shows the measured values of the viscosities of the homogenized mix solutions. Further, the appearance of the completed shelf-stable pudding was visually observed, and those with no aggregation were evaluated as a product ensuring stability.

| - Formula | (parts) |
|---|---|
| Sugar: | 10.0 |
| Skim milk powder: | 3.0 |
| Coconut oil: | 3.0 |
| Gelling agent (GEL UP™ PI) : | 0.3 |
| Additives: | see Table 1-4 |
| Emulsifier (HOMOGEN™ DM-S) : | 0.1 |
| Trisodium citrate: | 0.1 |
| Color additive (CAROTENE BASE No. 9400-SV*): | 0.1 |
| Flavor (PUDDING FLAVOR No. 72724(P)*): | 0.1 |

The total amount was adjusted to 100 parts with ion exchanged water.

- Preparation Method

Step 1) A powder mixture of sugar, skim milk powder, the gelling agent, additives, the emulsifier, and trisodium citrate was added to an ion exchanged water and coconut oil under stirring, and the mixture was dissolved by heat-stirring at 80°C for 10 minutes.
Step 2) The color additive and the flavor were further added, followed by the addition of water to adjust the total amount.
Step 3) Homogenization was performed at 75°C with a homogenizer (first step: 10 MPa, second step: 5 MPa).
Step 4) The mixture was placed in a PP pudding cup at a liquid temperature of 60°C.
Step 5) Retort sterilization was performed at 121°C for 20 minutes.
Step 6) The mixture was cooled to be solidified, thereby obtaining a shelf-stable pudding.

- Evaluation

■ Stability

The aggregation was visually confirmed.

Evaluation Criteria for Stability

A: No aggregation, good stability
B: Slight aggregation was observed.
C: Severe aggregation, and separation were observed.

- Viscosity upon Preparation

The viscosity of the mix after the homogenization (Step 3) was measured using a Brookfield-type viscometer. Measurement Conditions: 60 rpm, Rotor No. 3, temperature of the mix = 60±2°C

Table 1-4

| Test Sample Additive | Blank | Comparative Example 1-11 | Comparative Example 1-12 | Comparative Example 1-13 | Comparative Example 1-14 | Example 1-8 | Example 1-9 | Example 1-10 |
|---|---|---|---|---|---|---|---|---|
| Xanthan gum (SAN ACE™*) | - | 0.05% | 0.1% | - | - | - | - | - |
| Fermentation-derived cellulose blend (SAN ARTIST™ PG*) | - | - | - | 0.3% | 0.45% | - | - | - |
| Welan gum (VIS TOP™ W*) | - | - | - | - | - | 0.05% | 0.1% | 0.15% |
| Stability | C | C | C | B | B-A | C-B | B-A | A |
| Viscosity (60°C) Unit: mPa·s | 9 | 57 | 102 | 72 | 139 | 60 | 79 | 135 |

- Results

It was confirmed that use of welan gum inhibited protein aggregation upon retort sterilization. The results were excellent compared with Comparative Examples using xanthan gum or fermentation-derived cellulose blend. More specifically, the addition of welan gum, even in a small amount, provided a viscosity lower than or similar to that of the examples using xanthan gum or fermentation-derived cellulose blend; moreover, the stability enhanced, and a smooth texture comparable to a chilled pudding was obtained.

Test Example 1-5: High-protein shelf-stable pudding

Shelf-stable pudding with a high protein content was prepared according to the formula below. Table 1-5 shows the types and amounts of the additives used in this example. The appearance of the completed shelf-stable pudding was observed based on the same standard as that in Test Example 1-4. Table 1-5 shows the evaluation results. The protein content per 100 g of the shelf-stable pudding obtained according to the following formula was 7.5 g.

| - Formula | (parts) |
|---|---|
| Sugar: | 1.5 |
| Sodium caseinate: | 2.7 |
| Protein: concentrated whey powder (Simplesse 100: CP Kelco) | 10.1 |
| Coconut oil: | 5.0 |
| Agar (GEL UP™ J-1630*): | 0.3 |
| Carrageenan (GEL RICH™ No. 3(F)*): | 0.05 |
| Additives: | see Table 1-5 |
| Color additive (CAROTENE BASE No. 9400-SV*): | 0.2 |
| Flavor (VANILLA ESSENCE No. 70*): | 0.1 |
| Sweetener (SAN SWEET™ SU-100*): | 0.1 |
| Sweetener (NEO SAN MARUKU™ AG*): | 0.1 |

The total amount was adjusted to 100 parts with ion exchanged water.

- Preparation Method

Step 1) A powder mixture of sugar, sodium caseinate, protein concentrated whey powder, additives, agar, carrageenan, and sweeteners was added to water and coconut oil under stirring, and the mixture was heated up to 90°C and stirred for 10 minutes for dissolution.

Step 2) The color additive and the flavor were added, followed by the addition of water to adjust the total amount.

Step 3) Homogenization was performed at 75°C with a homogenizer (first step: 10 MPa, second step: 5 MPa).

Step 4) The resulting mixture was packed in a PP pudding cup, and subjected to retort sterilization at 121°C for 20 minutes.

Step 5) The mixture was cooled to be solidified, thereby obtaining a shelf stable pudding.

Table 1-5

| Test Sample Additive | Blank | Comparative Example 1-15 | Comparative Example 1-16 | Example 1-11 |
|---|---|---|---|---|
| Fermentation-derived cellulose blend (SAN ARTIST™ PG*) | - | 0.45% | - | - |

(continued)

| Test Sample Additive | Blank | Comparative Example 1-15 | Comparative Example 1-16 | Example 1-11 |
|---|---|---|---|---|
| Fermentation-derived cellulose blend (SAN ARTIST™ PN*) | - | - | 0.45% | - |
| Welan gum (VIS TOP™ W*) | - | - | - | 0.15% |
| Stability | C | B | B | A |

- Evaluation

The above test results confirmed that use of welan gum inhibited protein aggregation upon retort sterilization. The results were superior to those of the fermentation-derived cellulose blend. When a fermentation-derived cellulose blend was used, the resulting pudding had a hard and brittle texture. When welan gum was used, the resulting pudding had a good perceived meltability in the mouth, and a smooth texture.

Test Example 1-6: Milk-containing drinkable coffee jelly

A milk-containing drinkable coffee jelly of the present invention was prepared according to the following formula. Table 1-6 shows the types and amounts of the additives used in this example. Table 1-6 shows the measured values of viscosities after the homogenization, as well as the visually evaluated appearance of the milk-containing drinkable coffee jelly.

```
- Formula                                       (parts)
Cow's milk:                                      22.0
Skim milk powder:                                 1.0
Sugar:                                            4.0
Sweetener (SAN SWEET™ SA-5050*):                 0.025
Instant coffee:                                   1.0
Gelling agent (carrageenan, locust bean gum):     0.3
Additives:                                    see Table 1-6
Emulsifier (HOMOGEN™ NO. 3136*):                 0.14
Sodium hydrogen carbonate:                        0.1
Flavor (COFFEE FLAVOR No. 112246(P)*) :           0.07
```

The total amount was adjusted to 100 parts with ion exchanged water.

- Preparation Method

Step 1) A powder mixture of sugar, skim milk powder, sweetener, instant coffee, gelling agent, additives, emulsifier, and sodium hydrogen carbonate was added to water and cow's milk under stirring, and the mixture was heated up to 80°C and stirred for 10 minutes for dissolution.
Step 2) The flavor was added, followed by the addition of water to adjust the total amount.
Step 3) Homogenization was performed at 75°C with a homogenizer (first step: 10 MPa, second step: 5 MPa).
Step 4) The mixture was packed in a can at a liquid temperature of 60°C.
Step 5) Retort sterilization was performed at 121°C for 20 minutes.
Step 6) The mixture was solidified by cooling, thereby obtaining a milk-containing drinkable coffee jelly.

- Evaluation Method

■ Stability of Protein

The aggregation was visually observed.

Evaluation Criteria for Stability

A: No aggregation, good stability
B: Slight aggregation was observed.
C: Severe aggregation, and separation were observed.

- Viscosity of Preparation

The viscosity of the mix after the homogenization (Step 3) was measured using a Brookfield type viscometer. Measurement Conditions: 60 rpm, Rotor No. 1 or 2, temperature = 60±2°C

■ Texture

After the solidification by cooling, the can was strongly shaken manually 10 times to make the jelly drinkable; after drinking it, the friability was sensorily evaluated.

A: The jelly had appropriate hardness, and was appropriately crumbled after shaking.
B: The jelly was relatively hard, and was not easy to drink, as coarse grains remained even after shaking.
C: The jelly was hard and was not easily crumbled even after shaking, and was not suitable to drink.

Table 1-6

| Test Sample Additive | Blank | Comparative Example 1-17 | Comparative Example 1-18 | Comparative Example 1-19 | Comparative Example 1-20 | Example 1-12 |
|---|---|---|---|---|---|---|
| Xanthan gum (SAN ACE™ *) | - | 0.05% | 0.12% | - | - | - |
| Fermented cellulose preparation (SAN ARTIST™ PG*) | - | - | - | 0.2% | 0.45% | - |
| Welan gum (VIS TOP™ W*) | - | - | - | - | - | 0.15% |
| Stability of Protein | C | C | C | C | B | A |
| Viscosity (60°C) Unit: mPa·s | 8 | 26 | 73 | 29 | 92 | 106 |
| Texture | A | B | C | B | C | A |

- Results

It was confirmed that use of welan gum for a drinkable jelly inhibited protein aggregation upon retort sterilization, while imparting a friability and a texture suitable for a jelly drink. In contrast, in a Comparative Example using xanthan gum, the protein aggregation was not inhibited, and a strong elasticity was imparted after the solidification by cooling; thus, the jelly was not crumbled even after shaking. The resulting property was thus not suitable for a drinkable jelly. In contrast, in a Comparative Example using a fermentation-derived cellulose blend, the protein aggregation upon retort sterilization was slightly inhibited; however, the jelly after the solidification by cooling was not easily crumbled, and was thus not suitable for a drinkable jelly.

Test Example 1-7: Tofu

Tofu was prepared according to the formula below. Table 1-7 shows the types and amounts of the additives used in this example, and the evaluation of the obtained tofu.

| - Formula | (parts) |
|---|---|
| Soymilk: | 95.0 |
| Bittern: | 3.0 |
| Additives: | see Table 1-7 |

The total amount was adjusted to 100 parts with ion exchanged water.

- Preparation Method

Step 1) A modified starch or an additive were added to a soymilk, and dissolved by 10 minutes stirring.
Step 2) A bittern was added, and stirred for 10 seconds.
Step 3) The resulting mixture was packed in a PP container, and subjected to retort sterilization at 121°C for 20 minutes.

Table 1-7

| No. | Additive | Amount | Evaluation |
|---|---|---|---|
| Blank | - | - | Hard, less smooth |
| Comparative Example 1-21 | Modified starch (Suehiro 200: Oji Cornstarch Co., Ltd.) | 1.0% | Slightly softer than blank, but not smooth due to pastiness particular to starch |
| Example 1-13 | Welan gum (VIS TOP™ W*) | 0.03% | Softer and smoother than blank |
| Example 1-14 | Welan gum (VIS TOP™ W*) | 0.1% | Further softer and smoother than Example 1-13 |

- Results

The tofu containing welan gum of the present invention did not easily harden even after retort sterilization, and had a smooth texture. Further, the sliminess particular to polysaccharides was not sensed, and the smooth and slippery texture particular to tofu was retained.
In contrast, the Comparative Example using a modified starch had a pasty texture despite the slight softness, and the smoothness was very low.

Test Example 1-8: Baked pudding

Baked pudding was prepared according to the formula below. Table 1-8 shows the types and amounts of the additives used in this example. Further, the hardness (gel strength) of the completed baked pudding was evaluated using a texture analyzer.

| - Formula | (parts) |
|---|---|
| Sugared frozen whole egg 20 (Kewpie Corporation): | 30.0 |
| Sugar: | 7.0 |
| Skim milk powder: | 2.1 |
| Coconut oil: | 4.2 |
| Additives: | see Table 1-8 |
| Emulsifier (HOMOGEN™ DM-S): | 0.07 |
| Flavor (PUDDING FLAVOR No. 72724(P)*): | 0.07 |

The total amount was adjusted to 100 parts with ion exchanged water.

- Preparation Method

Step 1) A powder mixture of sugar, skim milk powder, additives, and the emulsifier was added to an ion exchanged water and coconut oil under stirring, and the mixture was heated up to 80°C and stirred for 10 minutes for dissolution.
Step 2) The flavor and ion exchanged water were added, followed by homogenization at 75°C with a homogenizer (first step: 10 MPa, second step: 5 MPa).
Step 3) After the mixture was cooled to 20°C, sugared frozen whole egg 20 was added.
Step 4) The resulting mixture was packed in a PP cup, and baked in an oven at 170°C for 40 minutes.
Step 5) The baked mixture was solidified by cooling.

- Evaluation Method

■ Gel strength

The hardness (gel strength) of the pudding stored in a refrigerator overnight was measured using a texture analyzer (Texture Analyzer TA-XT Plus (Stable Micro Systems)).
Measurement Conditions: Cylindrical plunger (stainless steel) having a diameter of 11.3 mm, penetration speed = 1 mm/sec, product temperature = 5°C.

Table 1-8

| Test Sample Additive | Blank | Comparative Example 1-22 | Example 1-15 | Example 1-16 |
|---|---|---|---|---|
| Xanthan gum (SAN ACE™*) | - | 0.07% | - | - |
| Welan gum (VIS TOP™ W*) | - | - | 0.07% | 0.14% |
| Texture | Relatively hard and crumbly | Relatively softer and smoother than blank | Softer and smoother than blank and Comparative Example | Further smoother, and had good perceived meltability in mouth |
| Gel Strength Unit: N/cm$^2$ | 0.99 | 0.63 | 0.33 | 0.29 |

- Results

Use of welan gum prevented an egg protein in a baked pudding containing a large amount of egg from excessively hardening by heat coagulation, thereby obtaining a smooth pudding with a soft texture. The pudding had a smooth and soft texture compared with the example using xanthan gum.

Test Example 1-9: Pastry Cream

Pastry cream was prepared according to the formula below. Table 1-9 shows the types and amounts of the additives used in this example. Further, the completed pastry cream was evaluated visually and by its texture.

| - Formula | (parts) |
|---|---|
| Sugar: | 12.0 |
| Gelatin (SPECIAL GELATIN*): | 1.0 |
| Shelf-life extender (glycine): | 1.0 |
| Shelf-life extender (ART FRESH™ 50/50*): | 0.025 |
| Starch syrup: | 10.1 |

(continued)

| - Formula | (parts) |
|---|---|
| Salad oil: | 2.0 |
| Sugared frozen egg yolk 20 (Kewpie Corporation): | 15.0 |
| Cow's milk: | 10.0 |
| Ion exchanged water: | 65.0 |
| Additives: | see Table 1-9 |
| Flavor (CREAM OIL No. 86654(P)*): | 0.1 |

The total amount was adjusted to 120 parts with ion exchanged water.

The obtained mixture was further concentrated by boiling so that the total amount became 100 parts.

- Preparation Method

Step 1) A powder mixture of sugar, gelatin, shelf-life extenders, and additives was added to ion exchanged water, starch syrup, salad oil, sugared frozen egg yolk 20, and cow's milk under stirring, and the mixture was heated up to 70°C.

Step 2) The flavor and ion exchanged water were added, followed by homogenization at 8,000 rpm for 10 minutes using a homomixer.

Step 3) The mixture was concentrated by boiling in a cooking pan to a specific amount.

Step 4) The mixture was packed in a PE pouch, and was solidified by cooling.

Table 1-9

| Test Sample Additive | Blank | Comparative Example 1-23 | Comparative Example 1-24 | Example 1-17 |
|---|---|---|---|---|
| Modified Starch | 1.0% | 3.0% | | |
| Xanthan gum (SAN ACE™*) | - | | 0.2% | - |
| Welan gum (VIS TOP™ W*) | - | - | | 0.2% |
| Appearance | Appreciation | No aggregation | Aggregation | No aggregation |
| Texture | Gritty and watery | Smoother than blank, but heavy, pasty, and sticky | Gritty and pasty | Smoother and lighter than Comparative Example 1-23 |

- Results

Use of welan gum inhibited the generation of grittiness due to heat coagulation of the egg protein in a pastry cream, thereby obtaining a pastry cream with a smooth and light texture. Aggregation was generated in the blank, and the blank had a watery texture without shape retainability. In a pastry cream of Comparative Example 1-23 containing more modified starch than the blank, aggregation was not generated and the pastry cream had a smooth texture. However, the pastry cream also had a heavy and pasty texture. Further, in Comparative Example 1-24 to which xanthan gum was further added, generation of aggregation was not inhibited, and the texture was gritty and pasty.

Test Example 2-1: Deep-fried chicken

Deep-fried chicken was prepared according to the formula below. Table 2-1 shows the types and amounts of the additives used in this example. The pickling liquid was prepared so that the viscosity was 80 mPa·s (measurement temperature: 8°C, rotation speed: 60 rpm). Table 2-1 shows the yield and texture evaluation of the obtained deep-fried chicken.

```
- Formula                                                    (parts)
Pickling liquid
    pH control agent(SAN POLYMER™ No. 366*):        4.0
    Salt:                                               1.0
    Additives:                                      see Table 2-1
    Ion exchanged water                                 95.0
```

- A method for preparing a pickling liquid

Step 1) An additive was added to ion exchanged water. After the mixture was heated up to 80°C and stirred for 10 minutes for dissolution, the mixture was cooled.
Step 2) The remaining materials were added and stirred for dissolution.

- Method for preparing deep-fried chicken

Step 1) Chicken breast meat (skinless) was cut into a piece having a weight of about 20 g.
Step 2) 20 parts of the pickling liquid was added to 100 parts of the cut chicken breast meat. The mixture was subjected to tumbling for 2 hours, and stored in a refrigerator overnight.
Step 3) The chicken was subjected to battering and deep-fried at 175°C for 3 minutes and 30 seconds.

Table 2-1

| No. | Additive | Amount (based on the total amount) | Evaluation of pickling liquid | | Evaluation of yield | | | |
|---|---|---|---|---|---|---|---|---|
| | | | pH | Viscosity[1] (mPa·s) | Pickling (%) | Deep-frying (%) | Total[2] (%) | |
| Blank | - | - | - | 4.0 | 110.8 | 70.1 | 77.7 | Standard |
| Comparative Example 2-1 | Xanthan gum (SAN ACE™ *) | 0.15 g (0.021%) | 9.58 | 83.0 | 116.9 | 77.6 | 90.7 | Softer than blank, and texture had no fibrous feeling of meat |
| Example 2-1 | Welan gum (VIS TOP™ W*) | 0.12 g (0.016%) | 9.65 | 80.0 | 117.9 | 78.7 | 92.7 | Juicier than blank, and satisfactory firm texture with stronger fibrous feeling of meat than Comparative Example 2-1 |

1) Viscosity measurement conditions:
Measurement temperature = 8°C, rotation speed of Brookfield-type viscometer = 60 rpm, Rotor No. 1; the viscosity after 1 minute rotation was measured.
2) Total yield: Yield after pickling × yield after deep-frying

- Evaluation

Comparative Example 2-1 containing xanthan gum was softer than the blank to which xanthan gum was not added; further, in this example, the satisfactory chewy texture of meat was lost, and the texture was dissatisfactory. In contrast, Example 2-1 containing welan gum had a fibrous feeling of meat similar to that of the blank. The meaty feeling was sufficiently felt with an increase in the yield.

Test Example 2-2: Meat loaf

Meat loaf was prepared according to the formula below. Table 2-2 shows the types and amounts of the additives used in this example. Table 2-2 shows the texture evaluation results of the obtained meat loaf.

| - Formula | (parts) |
|---|---|
| Pork arm meat (5 mmΦ): | 65.0 |
| Lard (5 mmΦ) : | 10.0 |
| Salt: | 0.7 |
| Sugar: | 0.5 |
| Polyphosphate: | 0.3 |
| L-sodium ascorbate (crystal): | 0.08 |
| Sodium nitrite: | 0.012 |
| Seasoning (SAN-LIKE™ SAUTEED ONION 9Y55E*): | 0.3 |
| Seasoning (SAN-LIKE™ BEEF ENHANCER VF-1734*): | 0.2 |
| Seasoning (SAN-LIKE™ SPICE MIX AR-1*): | 0.3 |
| Whey protein (MILPRO™ LG*): | 3.0 |
| Sodium caseinate: | 1.0 |
| Preservative (NATURAL KEEPER™*): | 0.3 |
| Preservative (ART FRESH™ 50/50*): | 0.05 |
| Additives: | see Table 2-2 |

The total amount was adjusted to 100.0 parts with ice water.

- Preparation Method

Step 1) Additives were added to ice water, and dissolved by stirring.

Step 2) The rest of the raw materials was added and mixed, and the mixture was packed in *a kaese* (meatloaf) mold.

Step 3) The mixture was heated with a convection oven at 180°C for 5 minutes.

Step 4) The meat was subjected to steam-heating until the center of the meat was heated up to 70°C.

Table 2-2

| | Additive | Amount (based on the total amount) | Texture of meat loaf |
|---|---|---|---|
| Blank | Dextrin | 0.1 g (0.09%) | Standard |
| Comparative Example 2-2 | Xanthan gum (SAN ACE™*) | 0.1 g (0.09%) | Softer and slimier than blank |
| Example 2-2 | Welan gum (VIS TOP™ W*) | 0.1 g (0.09%) | Softer than blank but not slimy, and had enhanced granular feeling of meat |

- Evaluation

As shown in the results in Table 2-2, the addition of welan gum to a meat loaf made the meat dough softer and more brittle, and its texture had a strong granular feeling of meat comparable to real minced meat.

Test Example 2-3: Hamburg steak

Hamburg steak was prepared according to the formula below. Table 2-3 shows the types and amounts of the additives used in this example. Table 2-3 shows the yield after heating and texture evaluation results of the obtained Hamburg steak.

| - Formula | (parts) |
|---|---|
| Minced chicken breast meat (with skin, 5-mm minced): | 15.0 |
| Minced Pork arm meat (with skin, 5-mm minced): | 10.0 |
| Lard (5-mm minced): | 10.0 |
| Rehydrated granular vegetable protein (mixed with water in an amount of 4 times): | 15.0 |
| Onion (shredded, 80% sauteed): | 15.0 |
| Dry bread crumbs: | 5.0 |
| Powdered soybean protein: | 2.0 |
| Modified starch: | 2.0 |
| Sugar: | 1.0 |
| Salt: | 0.5 |
| pH control agent (SAN POLYMER™ No. 366*): | 0.4 |
| Seasoning (SAN-LIKE™ SPICE MIX BW-1*): | 0.3 |
| Shelf-life extender (ART FRESH™/No. 101*): | 0.2 |
| Additives: | see Table 2-3 |

The total amount was adjusted to 100 parts with ion exchanged water.

- Preparation Method

Step 1) All of the materials in the formula were mixed well, and placed in an 80-g flat oval mold.

Step 2) Each side of the Hamburg steak was cooked in a hot plate at 180°C until brown, and was subjected to steam-heating at 90°C until the temperature of the center reached 80°C.

Step 3) The Hamburg steak was left to stand until the temperature of the center became equal to room temperature (25°C).

The heating yield was calculated according to the following formula.

$$\text{Heating yield (\%)} = (\text{weight before heating/weight after heating}) \times 100$$

The Hamburg steak at room temperature was eaten, and the texture was evaluated.

Table 2-3

| Test Sample Additive | Blank | Comparative Example 2-4 | Example 2-5 | Example 2-6 |
|---|---|---|---|---|
| Xanthan gum (VIS TOP™ D-3500*) | - | 0.2% | - | - |

(continued)

| Test Sample Additive | Blank | Comparative Example 2-4 | Example 2-5 | Example 2-6 |
|---|---|---|---|---|
| Welan gum (VIS TOP™ W*) | - | - | 0.2% | 0.4% |
| Heating yield (%) | 96.0 | 98.3 | 98.5 | 99.0 |
| Texture | No sliminess | Slimier and gooier than blank | Hardly slimy, easy to be crumbled | Hardly slimy, evenly soft |

- Evaluation

The heating yield was superior in the Hamburg steak to which welan gum was added to that of the Hamburg steak of blank or the Hamburg steak of Comparative Example 2-4 containing xanthan gum. Moreover, the texture was not slimy, and was easy to eat.

Test Example 2-4: *Kamaboko*

*Kamaboko* was prepared according to the formula below. Table 2-4 shows the types and amounts of the additives used in this example.
The texture of the obtained *kamaboko* was evaluated.

| - Formula | (parts) |
|---|---|
| Minced fish (SA): | 34.0 |
| Minced fish (2nd grade): | 16.0 |
| Salt: | 1.5 |
| Potato starch: | 5.0 |
| Preservative (SAN KIPRO™ No. 9): | 1.0 |
| Monosodium L-glutamate: | 0.5 |
| Additives: | see Table 2-4 |

The total amount was adjusted to 100 parts with ice water.

- Preparation Method

Step 1) The minced fish (SA) and the minced fish (2nd grade) in the formula were cut into 2-cm square blocks, and coarsely ground with a cooled cutter.
Step 2) Salts were added and ground therein until a paste was obtained.
Step 3) 1/3 of ice water was added, and then preservatives and monosodium L-glutamate were added; the resulting mixture was ground well.
Step 4) Another 1/3 of ice water was added, and then additives were added; the resulting mixture was ground well.
Step 5) The remaining ice water and potato starch were gradually added, and the mixture was ground until the temperature became 8°C.
Step 6) The mixture was packed in a vinyl chloride casing, steamed at 40°C for 20 minutes, and then left to stand for 30 minutes at room temperature.
Step 7) The mixture was boiled at 90°C for 40 minutes, and then cooled.

Evaluation Criteria

Texture: the obtained *kamaboko* was cut into 1-cm-wide slices, eaten, and evaluated.

Table 2-4

|  | Additive | Amount (%) | Texture |
|---|---|---|---|
| Blank | - | - | Standard |
| Comparative Example 2-4 | Guar Gum (VIS TOP™ D-20*) | 0.05 | Softer than blank, dry and hard |
| Example 2-5 | Welan gum (VIS TOP™ W*) | 0.05 | Softer than blank, easy to be crumbled |

- Results

In comparison with the blank that serves as the standard, the *kamaboko* in the Example was soft, and had a texture such that the *kamaboko* was easily crumbled. The *kamaboko* in the Comparative Example was softer than the blank, but had a dry and hard texture.

Test Example 2-5: Finely minced sausage

Finely minced sausage was prepared according to the formula below. Table 2-5 shows the types and amounts of the additives used in this example. Table 2-5 also shows the results of texture evaluation of the obtained finely minced sausage.

```
- Formula                                                    (parts)
Minced chicken breastmeat (with skin, 5-mm minced):           30.0
Chicken skin (5-mm minced):                                    5.0
Modified starch:                                               8.0
Powdered soybean protein:                                      5.0
Dried egg white:                                               3.0
Salt:                                                          1.5
Sodium caseinate:                                              1.0
Sugar:                                                         0.5
Polyphosphate:                                                 0.3
Seasoning (SAN-LIKE™ SPICE MIX SW-1*):                         0.3
Preservatives (NATURAL KEEPER™*):                              0.3
Seasoning (SAN-LIKE™ AMINO BASE NAG*)
L-sodium ascorbate (crystal):                                  0.08
Sodium nitrite:                                                0.012
Additives:                                              see Table 2-5
```

The total amount was adjusted to 100 parts with ice water.

- Preparation Method

Step 1) The minced chicken breast minced (with skin, 5-mm minced), the chicken skin (5-mm minced), the salt, the polyphosphate, and half of the ice water in the formula were added to a cooled cutter, and mixed. After additives were added, the mixture was mixed.
Step 2) The rest of the raw materials was added and mixed until the temperature became 12°C.
Step 3) The mixture was placed in a Nojax casing, dried at 50°C for 15 minutes, smoked at 60°C for 30 minutes in a smoke house, and then steamed at 75°C for 20 minutes.

Table 2-5

| Test Sample Additive | Blank | Comparative Example | Example 2-8 | Example 2-9 | Example 2-10 |
|---|---|---|---|---|---|
| Welan gum (VIS TOP™ W*) | - | - | 0.1% | 0.2% | 0.3% |
| Xanthan gum (VIS TOP™ D-3500*) | - | 0.1% | - | - | - |
| Texture | Sticky | Slimy and gooey | Hardly sticky or slimy, relatively easy to be crumbled | Hardly sticky or slimy, easy to be crumbled | Soft, hardly sticky or slimy |

- Results

Although the sausage of the blank was sticky, the stickiness and the sliminess were suppressed by the addition of welan gum, and a texture that makes the sausage easy to be crumbled was imparted. Comparative Example 2-6, to which xanthan gum was added, was slimy, and the texture was gooey.

Test Example 2-6: Coarsely minced sausage

Coarsely minced sausage was prepared according to the formula below. Table 2-6 shows the types and amounts of the additives used in this example. Table 2-6 also shows the results of texture evaluation.

| - Formula | (parts) |
|---|---|
| Pork arm meat (5-mm minced): | 55.0 |
| Lard (5-mm minced): | 14.0 |
| Modified starch: | 3.0 |
| Powdered soybean protein: | 2.0 |
| Salt: | 1.5 |
| Sugar: | 0.5 |
| Polyphosphate: | 0.3 |
| Seasoning (SAN-LIKE™ SPICE MIX SW-1*): | 0.3 |
| Preservatives (NATURAL KEEPER™ *): | 0.3 |
| Seasoning (SAN-LIKE™ AMINO BASE NAG*): | 0.2 |
| L-sodium ascorbate (crystal): | 0.08 |
| Sodium nitrite: | 0.012 |
| Additives: | see Table 2-6 |

The total amount was adjusted to 100 parts with ice water.

- Preparation Method

Step 1) The pork arm meat (5-mm minced), the lard (5-mm minced), the salt, the polyphosphate, and half of the ice water in the formula were mixed. After additives were added, the mixture was further mixed.

Step 2) The rest of the raw materials was added and mixed until the temperature became 12°C.

Step 3) The mixture was placed in a Nojax casing, dried at 50°C for 15 minutes, smoked at 60°C for 30 minutes in a smoke house, and then steamed at 75°C for 20 minutes.

Table 2-6

| Test Sample Additive | Blank | Comparative Example 2-7 | Example 2-11 | Example 2-12 |
|---|---|---|---|---|
| Welan gum (VIS TOP™ W*) | - | - | 0.1% | 0.2% |
| Xanthan gum (VIS TOP™ D-3500*) | - | 0.1% | - | - |
| Evaluation | Sticky | Slimy and gooey | Hardly sticky or slimy, easy to be crumbled | Hardly sticky or slimy, easy to be crumbled |

- Results

As in the finely minced sausage of Test Example 2-5, although the blank was sticky, the stickiness and the sliminess were suppressed by the addition of welan gum, and a texture that makes the sausage easy to be crumbled was imparted. Comparative Example 2-7, to which xanthan gum was added, was slimy, and the texture was gooey.

Test Example 3-1: *Takoyaki*

*Takoyaki* was prepared according to the formula below. Table 3-1 shows the types and amounts of the additives used in this example. The texture of the *takoyaki* was evaluated (after cooking, and after freeze-thawing). Table 3-1 shows the results.

```
- Formula                                               (g)
Soft flour (sieved with a 8.6 M):                       100.0
Whole egg (strained with a mesh):                       21.1
Seasoning (SAN-LIKE™ WAFU DASHI L*):                    2.6
Salt:                                                   2.1
Monosodium L-glutamate:                                 2.1
Seasoning (SAN-LIKE™ TASTE BASE™ A (RENEWED)*):         0.1
Leavening agent (SAN OVER™ O-62*) :                     1.1
Additives:                                              see Table 3-1
Ion exchanged water:                                    76.7
```

- Preparation Method

Comparative Example 3-1, and Examples 3-1 and 3-2

Step 1) A 1% aqueous solution of xanthan gum or welan gum (dissolved with a propeller stirrer at 80°C for 10 minutes) was prepared and cooled.
Step 2) Water and the mixture prepared in Step 1 were mixed so that the additives had specified concentrations.
Step 3) Soft flour was added to the mixture prepared in Step 2, and stirred for 5 minutes.
Step 4) The rest of the raw materials other than the leavening agent was added, and the mixture was stirred for 5 minutes.
Step 5) Immediately before the cooking, the leavening agent was added, and the mixture was stirred for 1 minute.
Step 6) The mixture was cooked in a *takoyaki* hotplate (with salad oil, at 230°C).
Step 7) 7 minutes after the cooking was started, the cooked balls were turned over sequentially as they became hard enough for rotation.
Step 8) The cooked balls were turned over again as necessary, and cooked until the surfaces were crispy and slightly brown (about 30 minutes after the cooking was started).

Comparative Examples 3-2 to 3-4

Step 1) Soft flour and an additive were added to water, and the mixture was kneaded for 5 minutes.
Step 2) The rest of the raw materials other than the leavening agent was added, and the mixture was kneaded for 5 minutes.
Step 3) Immediately before baking, the leavening agent was added, and the mixture was kneaded for 1 minute.
Step 4) The mixture was baked as in the method described in Steps 6 to 8.

Table 3-1

| No. | Additive | Amount (based on the total amount) | Texture (30 minutes after baking) | Texture (30 minutes after thawing frozen product) |
|---|---|---|---|---|
| Blank | - | - | • Inferior perceived meltability in mouth<br>• Mealy | • Inferior perceived meltability in mouth<br>• Mealy |
| Comparative Example 3-1 | Xanthan gum (SAN ACE™ *) | 0.11 g (0.02%) | • Better perceived meltability in mouth than blank<br><br>• Pastier than blank | • Better perceived meltability in mouth than blank<br>• Pastier than blank |
| Comparative Example 3-2 | Modified Starch (Matsutani Yuri 8 : Matsutani Chemical Industry Co., Ltd.) | 1.1 g (0.2%) | • Similar perceived meltability in mouth to that of Comparative Example 3-1<br><br>• Further pastier than Comparative Example 3-1 | • Slightly inferior perceived meltability in mouth to that of Comparative Example 3-1<br>• Further pastier than Comparative Example 3-1 |
| Comparative Example 3-3 | Modified starch (Ingredion Japan. Pregel VA70T) | 1.1 g (0.2%) | • Similar perceived meltability in mouth and texture to those of Comparative Example 3-2 | Similar perceived meltability in mouth and texture to those of Comparative Example 3-2 |
| Comparative Example 3-4 | Maltodextrin (SMART TASTE™ *) | 1.1 g (0.2%) | • Similar perceived meltability in mouth to that of Comparative Example 3-1<br>• No pastiness | • Similar perceived meltability in mouth to that of Comparative Example 3-1<br>• No pastiness |
| Example 3-1 | Welan gum (VIS TOP™ W*) | 0.11 g (0.02%) | • Better perceived meltability in mouth than blank and Comparative Examples 3-1 to 3-4<br>• No pastiness | • Better perceived meltability in mouth than blank and Comparative Examples 3-1 to 3-4<br>• No pastiness |
| Example 3-2 | | 0.33 g (0.06%) | • Good perceived meltability in mouth<br>• No pastiness | • Good perceived meltability in mouth<br>• No pastiness |

- Evaluation

The *takoyaki* containing welan gum (Examples 3-1 and 3-2) had a crispier cooked surface than those containing xanthan gum (Comparative Example 3-1), those containing modified starch (Comparative Examples 3-2 and 3-3), or those containing maltodextrin (Comparative Example 3-4). The inside was not pasty, and had a good perceived meltability in the mouth.

Test Example 3-2: Plain Loaf

Plain loafs were prepared according to the formula below. Table 3-2 shows the types and amounts of the additives used in this example. Table 3-2 also shows the results of texture evaluation of the obtained plain loafs.

| - Formula | (g) |
|---|---|
| Flour: | 100.0 |
| Instant dry yeast: | 1.0 |
| Sugar: | 5.0 |
| Skim milk powder: | 3.0 |
| Salt: | 2.0 |
| Yeast food: | 0.1 |
| Margarine: | 5.0 |
| Additives: | see Table 3-2 |
| Ion exchanged water: | 70.0 |

- Preparation Method

Step 1) Raw materials other than margarine were mixed for about 7 minutes at 63 rpm to 107 rpm using a stand mixer.

Step 2) Margarine was added and mixed for about 6 minutes at 63 rpm to 107 rpm (kneading temperature: about 27°C) .

Step 3) After rising for an hour at 30°C, the dough was punched down (degassing) and further risen for 30 minutes.

Step 4) The dough was divided into 220 g, and was subjected to bench rest for 30 minutes.

Step 5) The dough was molded and risen for about 60 minutes in a dryer (35°C, humidity = 85%).

Step 6) The dough was baked for 33 minutes with an oven (Queen Oven EPQS-9-2, Fujisawa) with an upper heater at 160°C and a lower heater at 230°C (loss by baking: about 12%).

Table 3-2

| | Additive | Amount (based on the total amount) | Texture |
|---|---|---|---|
| Blank | - | - | Appropriately springy |
| Comparative Example 3-5 | Xanthan gum (SAN ACE™ *) | 0.3 g (0.16%) | Softer than blank |
| Comparative Example 3-6 | Welan gum (VIS TOP™ W*) | 0.093 g (0.05%) | Softer than blank, but close to Comparative Example 3-5 |
| Example 3-3 | | 0.186 g (0.1%) | Softer than Comparative Example 3-6 |
| Example 3-4 | | 0.3 g (0.16%) | Further softer than Comparative Example 3-5 |
| Example 3-5 | | 0.558 g (0.3%) | Softer than Example 3-3, and the softest among all examples shown in this table |
| Example 3-6 | | 0.93 g (0.5%) | Softer than Example 3-3, but slightly harder than Example 3-5 |

(continued)

| | Additive | Amount (based on the total amount) | Texture |
|---|---|---|---|
| Example 3-7 | | 1.86 g (1.0%) | Similar to Example 3-3 |

- Evaluation

According to the texture evaluation based on the texture of the blank, Comparative Example 3-5, to which xanthan gum was added, had a softer texture than the blank. Further, Comparative Example 3-6, to which 0.093 g of welan gum (0.05% in the bread) was added, had a texture similar to that of Comparative Example 3-5, to which xanthan gum was added.

As the amount of welan gum increased, the texture became softer. Example 3-5 had the best texture.

- Freeze-thawing test

The plain loafs of the blank, Comparative Example 3-5, and Example 3-4 in Table 3-2 were stored in a freezer for 7 days at -30°C. The textures were evaluated after the breads were thawed at 25°C for 4 hours. According to the evaluation based on the texture of the blank, Comparative Example 3-5, to which xanthan gum was added, had a softer texture than the blank. Example 3-4 to which welan gum was added had a further softer texture than that of Comparative Example 3-5.

Test Example 3-3: Frozen bread dough

Frozen bread dough was prepared according to the formula below. Table 3-3 shows the types and amounts of the additives used in this example. Table 3-3 also shows the results of texture evaluation of the obtained bread.

| - Formula | (g) |
|---|---|
| Flour: | 100.0 |
| Instant dry yeast: | 5.0 |
| Sugar: | 5.0 |
| Skim milk powder: | 3.0 |
| Salt: | 2.0 |
| Yeast food: | 0.1 |
| Margarine: | 5.0 |
| Additives: | see Table 3-3 |
| Ion exchanged water: | 70.0 |

- Preparation Method

Step 1) The raw materials other than margarine were mixed in the form of powder. Ion exchanged water was added to the mixture, followed by mixing for 7 minutes using a stand mixer at 63 rpm to 107 rpm.
Step 2) Margarine was added and mixed for 6 minutes at 63 rpm to 107 rpm (kneading temperature: about 22°C) .
Step 3) After 15 minutes of floor time, the dough was divided into 220 g, rolled, and subjected to bench rest for 10 minutes.
Step 4) The dough was molded and stored in a freezer (-30°C) for 18 days.
Step 5) The dough was thawed at room temperature until the temperature of the dough became 20°C.
Step 6) The dough was risen for 60 minutes in a dryer (35°C, humidity = 85%).
Step 7) The dough was baked for 33 minutes with an upper heater at 160°C and a lower heater at 230°C (loss by baking: about 12%).

Table 3-3

| | Blank | Comparative Example 3-7 | Example 3-8 | Example 3-9 |
|---|---|---|---|---|
| Xanthan gum (VIS TOP™ D-3500*) | - | 0.16% | - | - |
| Welan gum (VIS TOP™ W*) | - | - | 0.16% | 0.26% |
| Texture | Gritty texture | Slightly softer than blank | Softer than Comparative Example 3-7 | Further softer than Example 3-8 |

It was revealed that by adding welan gum, the resulting dough had a texture with no roughness, and that was softer than those of the frozen bread dough of the blank and the frozen bread dough to which xanthan gum was added.

Test Example 3-4: Pre-boiled noodles

Pre-boiled noodles were prepared according to the formula below, and texture-improving effects with respect to the noodles were evaluated. Table 3-4 shows the types and amounts of the additives used in this example. Table 3-4 also shows the results of texture evaluation of the obtained pre-boiled noodles.

|  | (g) |
|---|---|
| Flour (Nippon Flour Mills, *Tokuju*): | 100.0 |
| Salt: | 1.0 |
| Potassium carbonate: | 0.6 |
| Sodium carbonate: | 0.9 |
| Color additive (SAN YELLOW™ NO. 3L*): | 0.1 |
| Additives: | see Table 3-4 |
| Ion exchanged water: | 35.0 |

- Preparation Method

Step 1) Salt, potassium carbonate, sodium carbonate, and a color additive were added to ion exchanged water at 20°C, and dissolved by stirring for 5 minutes.

Step 2) Flour and additives were mixed in the form of powder, and the mixture prepared in Step 1 was slowly added thereto while stirring using a stand mixer; the mixture was then mixed by stirring for 12 minutes.

Step 3) The mixture obtained in Step 2 was transferred to a noodle kneader, and subjected to rough kneading to obtain a noodle sheet, followed by kneading 2 times.

Step 4) Subsequently, folding was performed twice, and the thickness of the noodle sheet was adjusted to 1.4 mm.

Step 5) The noodle sheet was cut with a cutting blade #22, and the noodles were boiled for 3 minutes and 15 seconds.

Step 6) After the noodles were cooled under running water for 15 seconds, the noodles were cooled with ice water for 15 seconds.

- Evaluation Method

Sensory evaluation of hardness and springiness of noodles

- Hardness

A: Hard and chewy

B: Relatively hard

C: Soft and easy to break

- Elasticity

A: Springy and glutinous

B: Relatively springy

C: No springy and brittle

Table 3-4

| No. | Additive | Amount (based on the total amount) | Immediately after boiling | | |
|---|---|---|---|---|---|
| | | | Hardness | Elasticity | Remarks |
| Blank | - | - | C | C | Standard |
| Comparative Example 3-9 | Acetylated distarch phosphate (CRISTAL SET300: Ingredion Japan) | 3.0% | C | B | Springy and glutinous |
| Example 3-12 | Welan gum (VIS TOP™ W*) | 0.2% | B-A | B-A | Harder and more springy than blank, satisfactory firm texture |
| Example 3-13 | Welan gum (VIS TOP™ W*) | 0.6% | A | A | Noodle was further harder and more springy than Example 3-12, satisfactory firm texture |

- Results

By using welan gum, hard and springy noodles with a satisfactory chewy texture may be obtained. Although modified starch also imparts hardness and springiness to noodles, welan gum gives more springy texture.

Further, the noodles containing 0.6% of welan gum had significant hardness and springiness, and a satisfactory chewy texture, compared with that containing 0.2% of welan gum.

Test Example 4-1: Japanese-style pasta sauce

A Japanese-style pasta sauce was prepared according to the formula below, and the sauce was evaluated. Tables 4-1, 4-2, and 4-3 show the types and amounts of the additives used in this example. Table 4-4 shows the results of evaluation of the obtained pasta sauce.

| - Formula | (parts) |
|---|---|
| *Buna Shimeji* (*Hypsizygus marmoreus*): | 10.0 |
| Cabbage: | 8.0 |
| Bacon: | 8.0 |
| Dark soy sauce: | 5.0 |
| Salt: | 1.0 |
| Seasoning (SAN-LIKE™ WAFU DASHI L*): | 1.0 |
| Seasoning (SAN-LIKE™ SHIITAKE M*): | 0.5 |
| Seasoning (SAN-LIKE™ CONSOMME 0316P*): | 0.5 |

(continued)

| - Formula | (parts) |
|---|---|
| Sweetener (sucralose*): | 0.002 |
| Flavor (PERILLA FLAVOR G*): | 0.1 |
| Additives: | see Tables 4-3 and 4-4 (for the components, see Table 4-2) |

The total amount was adjusted to 100 parts with ion exchanged water.

Table 4-1

| Additive | Component | Product Name |
|---|---|---|
| 1 | Gelatin | |
| 2 | Welan gum | VIS TOP™ W* |
| 3 | Iota carrageenan | GEL RICH™ No. 3 (F)* |
| 4 | Lambda carrageenan | CARRAGEENAN CSL-1(F)* |
| 5 | Gellan gum | Kelcogel LT-100* |
| 6 | Xanthan gum | VIS TOP™ D-3000* |
| 7 | Guar gum | VIS TOP™ D-20* |
| 8 | Psyllium seed gum | VIS TOP™ D-2074* |
| 9 | Tamarind seed gum | VIS TOP™ D-2032* |
| 10 | Locust bean qum | VIS TOP™ D-171* |
| 11 | Kappa carrageenan | CARRAGEENAN CSK-1(F)* |

Table 4-2

| Additive | Example 4-1 | Example 4-2 | Example 4-3 | Example 4-4 | Example 4-5 | Example 4-6 | Example 4-7 | Example 4-8 | Example 4-9 | Example 4-10 | Example 4-11 | Example 4-12 |
|---|---|---|---|---|---|---|---|---|---|---|---|---|
| 1 | 1.0 | 1.0 | 1.0 | 1.0 | 1.0 | 1.0 | 1.0 | 1.0 | 1.0 | 1.0 | 1.0 | 1.0 |
| 2 | 0.05 | 0.1 | 0.5 | 0.05 | 0.05 | 0.05 | 0.05 | 0.05 | 0.05 | 0.05 | 0.05 | 0.05 |
| 3 | | | | 0.2 | | | | | | | | |
| 4 | | | | | 0.2 | | | | | | | |
| 5 | | | | | | 0.02 | | | | | | |
| 6 | | | | | | | 0.2 | | | | | |
| 7 | | | | | | | | 0.2 | | | | |
| 8 | | | | | | | | | 0.2 | | | |
| 9 | | | | | | | | | | 0.2 | | |
| 10 | | | | | | | | | | | 0.2 | 0.125 |
| 11 | | | | | | | | | | | | 0.075 |

43

Table 4-3

| Additive | Comparative Example 4-1 | Comparative Example 4-2 | Comparative Example 4-3 | Comparative Example 4-4 | Comparative Example 4-5 | Comparative Example 4-6 | Comparative Example 4-7 | Comparative Example 4-8 | Comparative Example 4-9 | Comparative Example 4-10 |
|---|---|---|---|---|---|---|---|---|---|---|
| 1 | 1.0 | 1.0 | 1.0 | 1.0 | 1.0 | 1.0 | 1.0 | 1.0 | 1.0 | 1.0 |
| 3 | | 0.5 | | | | | | | | |
| 4 | | | 0.5 | | | | | | | |
| 5 | | | | 0.06 | | | | | | |
| 6 | | | | | 0.5 | | | | | |
| 7 | | | | | | 0.5 | | | | |
| 8 | | | | | | | 0.5 | | | |
| 9 | | | | | | | | 0.5 | | |
| 10 | | | | | | | | | 0.5 | 0.313 |
| 11 | | | | | | | | | | 0.187 |

- Preparation Method

Step 1) Additives were added to ion exchanged water (Table 4-1), and the mixture was stirred for 10 minutes at 80°C.
Step 2) *Buna Shimeji* (*Hypsizygus marmoreus*), cabbage, bacon, dark soy sauce, salts, 3 kinds of seasoning, sweetener, and flavor were added, followed by 10-minute stirring.
Step 3) After the evaporative water loss was compensated, 100 g of the mixture was packed in a PP cup container. After being slightly cooled, the mixture was rapidly frozen at -40°C, and stored in a freezer overnight.

- Evaluation Method

The sauce stored in a freezer overnight was thawed in a refrigerator at 5°C. The mass of the moisture removed from the gel sauce was measured as a syneresis amount.

The thawed sauce was heated in a microwave oven at 800 W for one minute to dissolve the gel, thereby preparing a sauce. A sensory evaluation with respect to the flavor release after the cooking was performed, and the temperature at which the cooked soup was gelled again was measured.

Table 4-4

| | Syneresis quantity (g) | Flavor release after microwave cooking | Gelling temperature of soup (°C) |
|---|---|---|---|
| Example 4-1 | 5.0 | A | 9 |
| Example 4-2 | 4.2 | A | 10 |
| Example 4-3 | 2.7 | B-A | 10 |
| Example 4-4 | 3.0 | A | 16 |
| Example 4-5 | 3.5 | A | 9 |
| Example 4-6 | 2.9 | A | 15 |
| Example 4-7 | 2.0 | A | 17 |
| Example 4-8 | 3.8 | A | 10 |
| Example 4-9 | 1.5 | A | 10 |
| Example 4-10 | 2.7 | A | 13 |
| Example 4-11 | 3.2 | A | 12 |
| Example 4-12 | 1.2 | A | 10 |
| Comparative Example 4-1 | 29.5 | A | 9 |
| Comparative Example 4-2 | 12.9 | B | 45 |
| Comparative Example 4-3 | 22.0 | B | 10 |
| Comparative Example 4-4 | 12.0 | C | 60 |
| Comparative Example 4-5 | 22.5 | C | 12 |
| Comparative Example 4-6 | 21.0 | C | 10 |
| Comparative Example 4-7 | 11.0 | B | 53 |

(continued)

|  | Syneresis quantity (g) | Flavor release after microwave cooking | Gelling temperature of soup (°C) |
|---|---|---|---|
| Comparative Example 4-8 | 24.5 | B | 11 |
| Comparative Example 4-9 | 17.5 | B | 12 |
| Comparative Example 4-10 | 21.0 | B | 55 |

- Results

The results of Table 4-4 revealed that by adding welan gum to a gelatin-containing soup, the syneresis upon freeze-thawing was greatly inhibited (Examples 4-1 to 4-3). It was also revealed that by combining welan gum with a polysaccharide commonly used for food manufacture, the syneresis was further inhibited, compared with Example 4-1 (containing the same amount of welan gum) containing only welan gum (Examples 4-4 to 4-12). The Japanese-style pasta sauces of Examples 4-1 to 4-12 to which welan gum was added achieved enhanced flavor release after the cooking in a microwave oven. In these Examples, the temperature at which the pasta sauce was again gelled was similar to that in Comparative Example 4-1 containing only gelatin, and gelation due to cooling of the pasta sauce did not occur. Thus, no influence of addition of welan gum was observed.

In contrast, a large amount of syneresis occurred in the Japanese-style pasta sauce to which welan gum was not added (Comparative Examples 4-1 to 4-10), and the flavor release was inferior (Comparative Examples 4-5 to 10). Further, the gelation temperature of the pasta sauce increased in some Examples (in particular, Comparative Examples 4-4, 4-7, and 4-10). This means that when the temperature of the pasta sauce decreases and falls to about 60°C after heating, gelation is restarted. More specifically, these Examples suggested that the sauce will be gelled, even during eating, if the temperature of the pasta sauce decreases to the aforementioned level.

**Claims**

1. A protein aggregation inhibitor comprising welan gum.

2. A protein-containing food comprising welan gum, in which protein aggregation is inhibited.

3. The protein-containing food according to claim 2, wherein the protein-containing food is any one of a processed egg product, a processed milk product, and a processed soybean product.

4. A processed meat food comprising welan gum.

5. The processed meat food according to claim 4, wherein the content of welan gum is 0.001 to 3 mass%.

6. A method for improving the texture of a processed meat food, the method comprising adding welan gum.

7. A flour-containing food comprising welan gum (preferably, a flour-containing food comprising welan gum having an improved texture).

8. The flour-containing food according to claim 7, wherein the amount of the welan gum in the entire flour-containing food is 0.001 to 1 parts by mass.

9. A method for improving the texture of a flour-containing food, the method comprising adding welan gum.

10. A method for inhibiting syneresis in a gelatin-containing soup upon freeze-thawing, the method comprising adding welan gum to the gelatin-containing soup.

**11.** The method according to claim 10, wherein the amount of the welan gum is 0.01 to 1 mass%, based on the total mass of the gelatin-containing soup after the addition of the welan gum.

**12.** The method according to claim 10 or 11, wherein the method comprises adding a polysaccharide thickener in combination with welan gum.

<table>
<tr><td colspan="2" align="center">**INTERNATIONAL SEARCH REPORT**</td><td colspan="2">International application No.<br>PCT/JP2016/080038</td></tr>
</table>

A. CLASSIFICATION OF SUBJECT MATTER
*A23L5/00*(2016.01)i, *A23L9/10*(2016.01)i, *A23L15/00*(2016.01)i, *A23L23/00*(2016.01)i, *A23L29/20*(2016.01)n

According to International Patent Classification (IPC) or to both national classification and IPC

B. FIELDS SEARCHED

Minimum documentation searched (classification system followed by classification symbols)
A23L5/00, A23L9/10, A23L15/00, A23L23/00, A23L29/20

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)
JSTPlus/JMEDPlus/JST7580(JDreamIII), CAplus/MEDLINE/BIOSIS(STN), WPIDS(STN), FROSTI(STN), FSTA(STN)

C. DOCUMENTS CONSIDERED TO BE RELEVANT

| Category* | Citation of document, with indication, where appropriate, of the relevant passages | Relevant to claim No. |
|---|---|---|
| Y | Toru HIDAKA, Muneaki YUKAWA, Shokuhin Tenkabutsu Jiten, edition of the year 2001, Food CHemicals Newspaper Inc., 01 October 2001 (01.10.2001), page 38, a whole article | 1-12 |
| X | JP 2008-127364 A (Taiyo Kagaku Co., Ltd.), 05 June 2008 (05.06.2008), claims 1 to 5; paragraphs [0017], [0025], [0053] (Family: none) | 2-4,7 |
| X | JP 2006-217802 A (Nippon Meat Packers, Inc.), 24 August 2006 (24.08.2006), claims 1 to 2; paragraphs [0008], [0019] (Family: none) | 2-3 |

[X] Further documents are listed in the continuation of Box C.          [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 December 2016 (22.12.16) | Date of mailing of the international search report<br>10 January 2017 (10.01.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/080038 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X/Y | JP 10-56960 A  (Asahi Chemical Industry Co., Ltd.), 03 March 1998 (03.03.1998), claims 1 to 2; paragraphs [0005], [0008]; examples 1 to 4; comparative examples 1 to 2 (Family: none) | 1-3/1-3 |
| X | JP 2013-78279 A  (Nippon Soda Co., Ltd.), 02 May 2013 (02.05.2013), paragraphs [0015] to [0016]; examples 1 to 3 (Family: none) | 4,6 |
| Y | WO 97/14320 A1  (Kibun Foods Inc.), 24 April 1997 (24.04.1997), examples 1, 2 & JP 4108124 B2          & US 2002/0001664 A1 examples 1, 2 & GB 2322784 A          & EP 857429 A1 | 4-6 |
| Y | JP 52-128249 A  (San-Ei Chemical Industries, Ltd.), 27 October 1977 (27.10.1977), a whole article; page 271 (Family: none) | 7-9 |
| X | JP 2007-49908 A  (Ina Food Industry Co., Ltd.), 01 March 2007 (01.03.2007), claims 1 to 7; paragraph [0013]; examples 7, 25, 26, 31 (Family: none) | 7-8 |
| Y | JP 2003-219845 A  (San-Ei Gen F.F.I., Inc.), 05 August 2003 (05.08.2003), paragraphs [0010], [0011]; example 1; comparative examples (Family: none) | 10-12 |

Form PCT/ISA/210 (continuation of second sheet) (January 2015)

<div align="center">**INTERNATIONAL SEARCH REPORT**</div>

| International application No. |
| --- |
| PCT/JP2016/080038 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
      The technical feature common to the inventions in claims 1-3 (Invention group 1), the inventions in claims 4-6 (Invention group 2), the inventions in claims 7-9 (Invention group 3) and the inventions in claims 10-12 (Invention group 4) is welan gum. As described in document 1, however, welan gum is a well-known thickening polysaccharide. Thus, no technical relevance can be found within the meaning of PCT Rule 13 among these inventions differing from each other.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

<div align="center">50</div>

**INTERNATIONAL SEARCH REPORT**

International application No.

PCT/JP2016/080038

Continuation of Box No.III of continuation of first sheet(2)

Further, there is no other common matter which is considered to be a special technical feature within the meaning of PCT Rule 13.2, second sentence, among the inventions concerning these invention groups.

Consequently, any technical relationship within the meaning of PCT Rule 13 cannot be found among those different inventions.

Consequently, it is not considered that the invention group 1-4 among the inventions set forth in claims are relevant to a group of inventions which are so linked as to form a single general inventive concept.

Thus, it appears that the present application has four inventions including a protein aggregation inhibitor comprising welan gum (Invention group 1), a processed meat food comprising welan gum (Invention group 2), a wheat flour-containing food comprising welan gum (Invention group 3), and a method for preventing water release in thawing a gelatin-containing frozen soup, said method comprising adding welan gum to the gelatin-containing soup (Invention group 4).

Document 1: Toru HIDAKA, Muneaki YUKAWA, Shokuhin Tenkabutsu Jiten, edition of the year 2001, Food Chemicals Newspaper Inc., 01 October 2001 (01.10.2001), page 38, a whole article

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2836867 A
- JP H06276953 B
- JP 2002262787 A
- JP H07107943 B
- JP 2008199900 A
- JP 2009065836 A
- WO 2006038413 A
- JP 2011010557 A
- JP 2011010556 A
- JP 2008011712 A
- JP 2013247869 A
- WO 9714320 A
- JP H02286059 A
- JP H04190766 A
- JP 2001224335 A
- JP 2004141146 A
- JP 2005058016 A
- JP 2001069903 A
- JP H08205831 A
- JP 2007215448 A
- JP 2010154801 A
- JP 2007259834 A
- JP 2007202564 A
- JP 2002000219 A
- JP H11164655 A
- JP H1075748 A